# EUROPÄISCHE PATENTSCHRIFT

(11) **EP 2 370 291 B1**
(45) Veröffentlichungstag und Bekanntmachung des Hinweises auf die Patenterteilung: **16.01.2019**
(21) Anmeldenummer: 09783809.8
(22) Anmeldetag: 07.10.2009
(51) Int. Cl.: B60N 2/68, B23K 20/12, B23K 101/00, B23K 103/04, B23K 103/10, B23K 103/16, B23K 103/08, B23K 103/18, B23K 103/20

(54) **FAHRZEUGSITZ MIT EINER MEHRZAHL VON STRUKTUR- ODER HALTETEILEN SOWIE VERFAHREN ZUM HERSTELLEN VON STRUKTUR- ODER HALTETEILEN EINES SOLCHEN FAHRZEUGSITZES**
VEHICLE SEAT HAVING A PLURALITY OF STRUCTURAL OR SUPPORT COMPONENTS AND METHOD FOR PRODUCING STRUCTURAL OR SUPPORT COMPONENTS OF A SAID VEHICLE SEAT
SIÈGE DE VÉHICULE COMPORTANT UNE PLURALITÉ D'ÉLÉMENTS DE STRUCTURE OU DE RETENUE, AINSI QUE PROCÉDÉ DE FABRICATION DES ÉLÉMENTS DE STRUCTURE OU DE RETENUE DUDIT SIÈGE DE VÉHICULE

(30) Priorität: 03.12.2008 DE 102008060136; 07.05.2009 DE 102009002912
(43) Veröffentlichungstag der Anmeldung: 05.10.2011
(73) Patentinhaber: Brose Fahrzeugteile GmbH & Co. Kommanditgesellschaft, Coburg, Max-Brose-Straße 1 96450 Coburg (DE)
(72) Erfinder: KROENER, Gregor, 96120 Bischberg (DE); KIESER, Sandra, 96450 Coburg (DE)
(74) Vertreter: Isarpatent
(86) Internationale Anmeldenummer: PCT/EP2009/063021
(87) Internationale Veröffentlichungsnummer: WO 2010/063505

(56) Entgegenhaltungen:
- WO-A2-2008/131228
- DE-A1- 4 337 939
- DE-A1- 10 127 166
- DE-U1-202007 009 701
- US-A1- 2003 062 759
- US-A1- 2005 023 880

## Beschreibung

### GEBIET DER ERFINDUNG

Die vorliegende Erfindung betrifft einen Fahrzeugsitz, insbesondere für Kraftfahrzeuge, mit einer Mehrzahl von Struktur- oder Halteteilen sowie Verfahren zum Herstellen von Struktur- oder Halteteilen eines solchen Fahrzeugsitzes.

### HINTERGRUND DER ERFINDUNG

Bekannte tragende Strukturen von Fahrzeugsitzen weisen Struktur- oder Halteteile auf, die aus dünnem Stahlblech gestanzt und miteinander verschweißt sind. Geschweißt werden bei Kraftfahrzeugsitzen nahezu ausschließlich gleiche Materialpaarungen, beispielsweise Stahl mit Stahl. Dies erhöht jedoch das Gesamtgewicht von Fahrzeugsitzen, was unerwünscht ist.

Das Gesamtgewicht von Fahrzeugsitzen lässt sich durch Verwendung von leichteren Materialien reduzieren. Dabei gilt es jedoch zu beachten, dass Strukturen von Fahrzeugsitzen einerseits Werkstoffe mit einer hohen gewichtsspezifischen Steifigkeit, Festigkeit und Energieabsorption aufweisen sollen, um die Sicherheit für den Insassen zu erhöhen, andererseits jedoch Leichtbau-Werkstoffe verwendet werden sollen, um das Gesamtgewicht zu verringern.

Die unterschiedlichen Werkstoffe solcher Hybridstrukturen müssen miteinander in geeigneter Weise verbunden werden. Als Verbindungstechniken sind aus dem Stand der Technik Kleben, Nieten, Schrauben oder Clinch-Nieten bekannt.

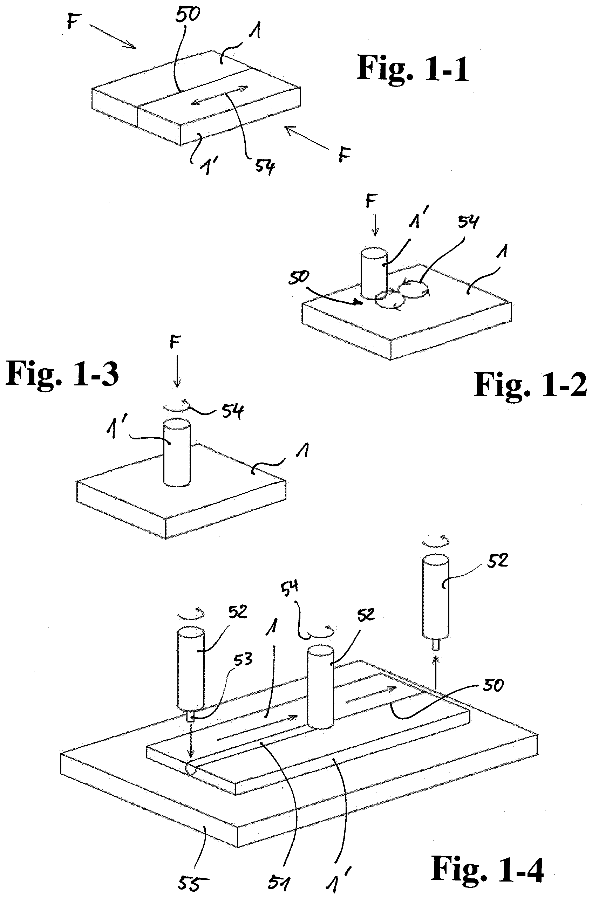

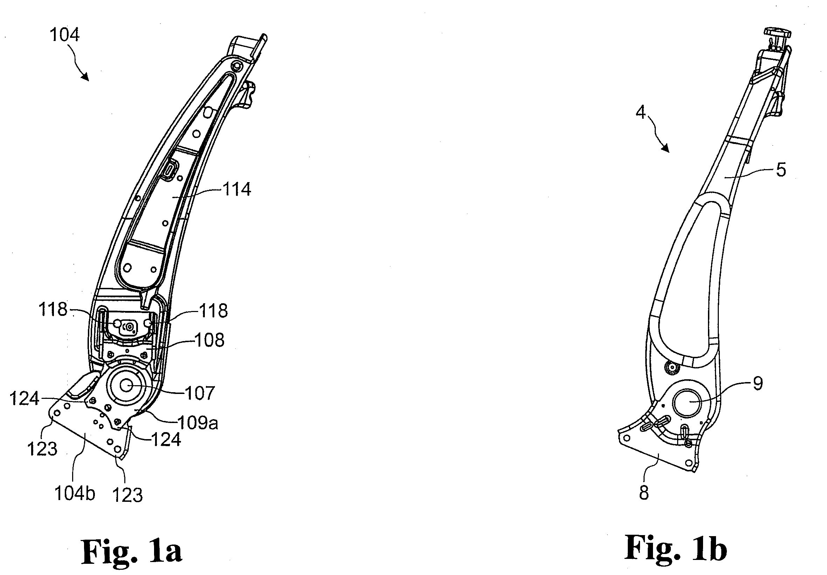

Die Fig. 1a zeigt in einer schematischen Seitenansicht ein Lehnengestell 104 gemäß dem Stand der Technik, das zwei Lehnengestell-Seitenteile 114 umfasst, an deren unterem Ende jeweils ein Beschlag 108 zur Verbindung mit einem nicht dargestellten Sitzgestell befestigt ist. Der Beschlag umfasst gemäß der Fig. 1a ein oberes sitzseitenteilfestes Verbindungsteil 109a und ein unteres sitzseitenteilfestes Verbindungsteil 109b, die miteinander über Schrauben oder Niete 124 verbunden sind. Zur Verbindung mit dem nicht dargestellten Sitzgestell mittels Schrauben oder Nieten sind im unteren sitzseitenteilfesten Verbindungsteil 109b Bohrungen 123 vorgesehen. Das obere Ende des Beschlags 108 ist über Schrauben oder Nieten 118 mit dem Lehngestell-Seitenteil 114 verbunden.

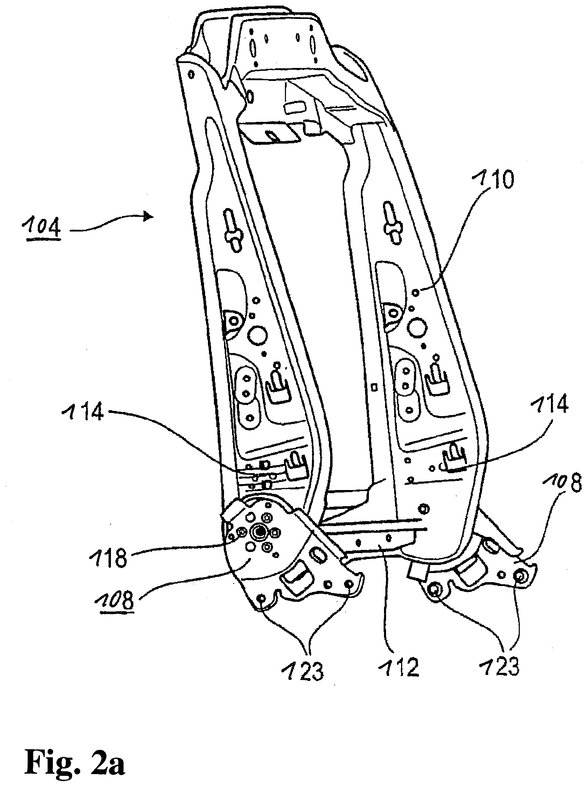

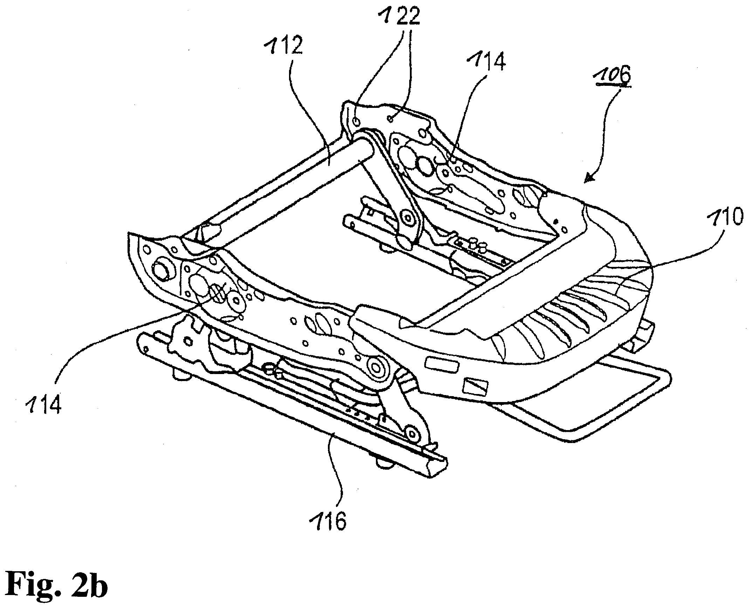

Die Figuren 2a und 2b zeigen ein weiteres Lehnengestell sowie ein Sitzgestell eines Fahrzeugsitzes gemäß dem Deutschen Gebrauchsmuster DE 20 2007 005 182 U1 der Anmelderin. Die beiden Gestellteile 104, 106 umfassen einen umlaufenden Tragrahmen 110, der die notwendige Stabilität für den Fahrzeugsitz gewährleistet. Im Verbindungsbereich, also im unteren Bereich des Lehnengestells 104 sowie im hinteren Bereich des Sitzgestells 106, ist jeweils eine Quertraverse 112 vorgesehen, die jeweils zwei randseitige Seitenwangen 114 miteinander verbindet. Zur Verbindung der beiden Gestellteile 104, 106 miteinander ist der Beschlag 108 vorgesehen. Das Sitzgestell 106 umfasst weiterhin eine Schienenführung 116 mit einer Ober- und Unterschiene, die fest mit einem Fahrzeugboden verbunden ist, wobei die Oberschiene zur Sitzlängsverstellung in Längsrichtung (X-Richtung) in der Unterschiene verschoben werden kann. Die Beschläge 108 sind an den Lehnengestell-Seitenwangen 114 mittels Schrauben oder Nieten 118 vormontiert. Zur Verbindung der Beschläge 108 mit dem Sitzgestell 106 mittels Schrauben oder Nieten dienen die Löcher 123 am unteren Ende der Beschläge 108. Die zur Verbindung mittels Schrauben oder Nieten vorgesehenen Verbindungsabschnitte müssen jedoch vergleichsweise groß ausgebildet werden, da zur Crashoptimierung hochfeste Verbindungstechniken erforderlich sind. Dies erhöht das Gewicht und die Herstellungskosten eines Fahrzeugsitzes. Ferner ist das Verschrauben oder Vernieten ein vergleichsweise aufwändiger Vorgang.

Aus dem Stand der Technik sind zum Verbinden von zwei unterschiedlichen Metallen auch Schweißverfahren bekannt, die man grundsätzlich in Schweißverfahren ohne Anwendung von Druck und Schweißverfahren mit Anwendung von Druck unterteilt. Als Schweißverfahren ohne Druck (Schmelzschweißen) sind aus dem Stand der Technik beispielsweise das Metall-Aktivgas-Schweißen oder Laserschweißen bekannt. Diese Schweißverfahren sind jedoch vergleichsweise aufwändig und bei beengten Platzverhältnissen häufig wenig geeignet.

EP 1 321 218 B1 offenbart ein solches Verfahren zum Fügen von artverschiedenen Verbindungen aus zwei unterschiedlichen Werkstoffen, nämlich Aluminium oder einer Aluminiumlegierung und Stahl oder beschichtetem Stahl, mit einem Lichtbogen unter einer Schutzgasatmosphäre, die aus einem speziellen Gasgemisch gebildet ist.

EP 1 806 200 A1 offenbart ein Verfahren zum Verbinden eines eisenbasierten Elements mit einem aluminium-basierten Element, wobei auf einer Verbindungsoberfläche von zumindest einem der miteinander zu verbindenden Elemente eine Zinkschicht aufgebracht wird, die beim Schweißen plastisch wird, um die Elemente miteinander zu verbinden. Als Schweißverfahren werden Widerstandsschweißen, Laserschweißen, Elektronenstrahlschweißen oder Lichtbogenschweißen offenbart.

Aus dem Stand der Technik sind zum Verbinden von zwei unterschiedlichen Metallen auch Schweißverfahren unter Anwendung von Druck (Pressschweißen) bekannt, beispielsweise das Rollennahtschweißen, Buckelschweißen oder Punktschweißen. Dabei werden die miteinander zu verbindenden Teile im plastischen, aber ungeschmolzenen Zustand miteinander verbunden. Mit Ausnahme des Ultraschallschweißens sind diese Schweißverfahren jedoch im Fahrzeugsitzbereich nicht bekannt.

Nachfolgend werden Beispiele für solche Schweißverfahren zum Schweißen unterschiedlicher Materialpaarungen dargelegt, die zum Teil auch im Kraftfahrzeugbau eingesetzt werden.

WO 93/10935 offenbart ein Verfahren zum Verbinden von Teilen durch Reibrührschweißen (Friction Stir Welding). EP 1400 302 A1 und EP 1 884 308 A1 offenbaren weitere Verfahren zum Reibrührschweißen.

EP 0 513 646 B1 offenbart ein Verfahren zum Verbinden von Rohlingen und Konstruktionsteilen aus Stahl mit solchen aus Aluminium bei der Herstellung von Turbinen, wobei die Rohlinge bzw. Teile unter Zwischenschaltung zumindest einer Übergangsschicht aus einem duktilen Nebengruppenmetall miteinander verbunden werden, wobei zum Verbinden von Teilen aus Stahl mit solchen aus Aluminiumlegierung auf den Stahl eine Reinnickelschicht durch Reibschweißen aufbringt, deren abgearbeitete Oberfläche mit der Aluminiumlegierung durch Reibschweißen verbunden wird oder zum Verbinden von Teilen aus Stahl mit solchen aus Titanlegierung auf den Stahl durch Reibschweißen eine Kupferschicht und auf die Titanlegierung eine Vanadinschicht durch Reibschweißen aufträgt und die bearbeiteten Kupfer- und Vanadinoberflächen durch Reibschweißen miteinander verbindet.

DE 103 93 368 T5 offenbart ein Laser-Rollfügeverfahren für ungleiche Metalle zum Verbinden eines ersten Metallblechs und eines zweiten Metallblechs unterschiedlichen Materials miteinander, die in einem Nichtkontaktzustand gehalten werden, bei dem nachdem lediglich das erste Metallblech mittels Laserbestrahlung aufgeheizt wurde, ein aufgeheizter Abschnitt des ersten Metallblechs durch eine Pressschweißwalze gegen das zweite Metallblech gepresst wird, so dass sie in einen festen Kontakt zueinander gebracht werden und einer plastischen Deformation unterzogen werden, und wobei ein Verbindungsabschnitt zwischen dem ersten Metallblech und dem zweiten Metallblech gekühlt wird.

Im Kraftfahrzeugsitzbereich werden als Schweißverfahren Laserschweißen, Punktschweißen und Buckelschweißen eingesetzt.

Das Deutsche Gebrauchsmuster DE 20 2007 009 701 U1 offenbart eine Struktur eines Fahrzeugsitzes, mit wenigstens zwei Strukturteilen aus unterschiedlichen Materialien, die mittels Ultraschallschweißen an wenigstens einer Kontaktstelle miteinander verbunden sind. Wenigstens eines der Strukturteile kann aus Aluminium oder einer Aluminiumlegierung und der entsprechende Verbindungspartner aus Stahl bestehen oder alternativ kann wenigstens eines der Strukturteile aus einem faserverstärkten Kunststoff und der entsprechende Verbindungspartner aus Aluminium, einer Aluminiumlegierung oder aus Stahl bestehen. Bei den beengten Platzverhältnissen im Fahrzeugsitzbereich ist es nicht immer einfach, ausreichende Leistungen über Ultraschallwandler einzukoppeln. Für eine flexible Fertigung kann dies die Kosten zusätzlich Die DE 10127166 A1 zeigt einen Fahrzeugsitz für Kraftfahrzeuge mit einer Mehrzahl von Struktur- oder Halteteilen, die an mindestens einer Verbindungsstelle miteinander oder mit einem weiteren Teil verbunden sind, wobei die Verbindung an mindestens einer der Verbindungsstellen durch Reibschweissen hergestellt ist, wobei eines der Struktur- oder Halteteile als ein Lehnengestell-Seitenteil ausgebildet ist.

### ZUSAMMENFASSUNG DER ERFINDUNG

Es ist eine Aufgabe der vorliegenden Erfindung, eine bessere und insbesondere einfacher herstellbare Verbindung von Struktur- und Halteteilen bei einem Fahrzeugsitz, insbesondere für Personenkraftwagen, bereitzustellen. Eine weitere Aufgabe besteht darin, Struktur- oder Halteteile des Fahrzeugsitzes mit unterschiedlichen Materialpaarungen miteinander oder mit anderen Teilen in einfacher und kostengünstiger Weise zu verbinden.

Zumindest eine der genannten Aufgaben wird durch einen Fahrzeugsitz mit den Merkmalen des Anspruchs 1 und/oder durch ein Verfahren mit den Merkmalen des Anspruchs 9 gelöst.

Demgemäß ist vorgesehen:
- Ein Fahrzeugsitz mit den Merkmalen des Anspruchs 1.
- Ein Verfahren mit den Merkmalen des Anspruchs 9.

Die Grundidee der Erfindung besteht darin, dass die Verbindung an mindestens einer der Verbindungsstellen durch Reibschweißen ausgebildet ist, worunter im Sinne der vorliegenden Anmeldung ausdrücklich nicht Ultraschallschweißen zu verstehen sein soll.

Dadurch wird eine Verbindung von unterschiedlichen Materialien in einfacher und kostengünstiger Weise möglich, beispielsweise von Aluminium/Aluminiumlegierungen und Stahl und/oder von (glas-)faserverstärkten Kunststoffen. Dies ermöglicht belastungs- und gewichtsoptimierten Hybridstrukturen für Kraftfahrzeugsitze, bei denen verschiedene Werkstoffe miteinander kombiniert sind.

Da beim Reibschweißen ein vergleichsweise geringer Wärmeeintrag erfolgt, tritt damit ein geringer Verzug der zu verbindenden Teile auf, was somit kleinere Toleranzen ermöglicht. Auch die Prozessüberwachung ist beim Reibschweißen vergleichsweise einfach, insbesondere können die Prozessparameter beim Reibschweißen, beispielsweise Reibgeschwindigkeit, Reibfrequenz und -häufigkeit sowie Anpressdruck, sehr reproduzierbar und gleichbleibend vorgegeben werden.

Dadurch, dass wenigstens zwei der Halte- oder Strukturteile aus unterschiedlichen Materialien bestehen und mittels Reibschweißen an wenigstens einer Verbindungsstelle miteinander verbunden sind, steht eine kostengünstig hergestellte Hybridstruktur von geringem Gewicht zur Verfügung, welche die notwendige Festigkeit bietet. Die Materialien können dabei Aluminium/Aluminiumlegierungen einerseits und Stahl, insbesondere hochfester Stahl, andererseits sein. Es sind aber auch andere Materialien möglich, beispielsweise glasfaserverstärkte oder andere faserverstärkte Kunststoffe, beispielsweise in Kombination mit einem der genannten Metalle. Es können zwei oder mehr Halte- oder Strukturteile gleichzeitig miteinander verbunden werden. Auch die Verbindung an mehreren Verbindungsstellen gleichzeitig ist möglich.

Vorteilhafte Ausgestaltungen und Weiterbildungen der Erfindung ergeben sich aus den Unteransprüchen sowie aus der Beschreibung in Zusammenschau mit den Figuren der Zeichnung.

In einer bevorzugten Ausgestaltung ist die Verbindung an mindestens einer der Verbindungsstellen durch Relativbewegung der miteinander zu verbindenden Struktur- oder Halteteile hergestellt. Die die Relativbewegung ist dabei durch Hin- und Herbewegung der miteinander zu verbindenden Struktur- oder Halteteile, bevorzugt innerhalb einer Ebene, durch Rotieren von zumindest einem der miteinander zu verbindenden Struktur- oder Halteteile und/oder durch multiorbitales Reibschweißen hergestellt.

In einer ebenfalls besonders bevorzugten Ausgestaltung ist die Verbindung an mindestens einer der Verbindungsstellen durch Reibrührschweißen mittels hergestellt.

In einer bevorzugten Ausgestaltung ist die Verbindung zur Übertragung von Drehmomenten zwischen den zu verbindenden Struktur- oder Halteteilen vorgesehen. Vorzugsweise ist dabei die Verbindung randnah oder nahe der Stelle des höchstens Drehmomentes hergestellt.

In einer Ausgestaltung bestehen die miteinander verbundenen Struktur- oder Halteteile aus unterschiedlichen Materialien. Hier bestehen vorzugsweise wenigstens eines der Struktur- oder Halteteile aus Aluminium, einer Aluminiumlegierung oder einer Magnesiumlegierung und der jeweilige andere Verbindungspartner aus Stahl, insbesondere hochfestem Stahl. Denkbar ist auch, wenn wenigstens eines der Struktur- oder Halteteile aus einem faserverstärkten Kunststoff und der jeweilige andere Verbindungspartner aus Aluminium, einer Aluminiumlegierung, einer Magnesiumlegierung oder Stahl besteht.

In einer Ausgestaltung bilden die miteinander verbundenen Strukturteile die tragende Struktur eines Lehnengestells aus.

Erfindungsgemäß ist ein jeweiliges Lehnengestell-Seitenteil an mindestens einer der Verbindungsstellen mit einem Beschlag zur Kopplung mit einem

Sitzgestell verbunden ist oder ein jeweiliges Sitzgestell-Seitenteil an mindestens einer der Verbindungsstellen mit einem Beschlag zur Kopplung mit dem Lehnengestell verbunden. Erfindungsgemäß sind dabei an dem Lehnengestell-Seitenteil und dem Beschlag Montagehilfen vorgesehen, die ein Montagehilfen-Paar bilden und formschlüssig ineinander greifen und derart ausgebildet sind, dass das Lehnengestell-Seitenteil und der Beschlag zum Ausführen eines Reibschweißprozesses über eine vorbestimmte Distanz relativ zueinander bewegbar sind und nach Abschluss einer der Erwärmung der miteinander zu verbindenden Abschnitte dienenden Bewegungsphase des Reibschweißprozesses durch gegenseitigen Anschlag der Montagehilfen in einer vorbestimmten Lage relativ zueinander positioniert sind. Die Montagehilfen greifen hier vorzugsweise durch eine Ausnehmung ineinander ein, wobei die Ausnehmung z.B. als ein Langloch ausgebildet sein kann und die andere Montagehilfe als ein Querstift ausgebildet sein kann.

In einer bevorzugten Ausgestaltung ist ein jeweiliges Lehnengestell-Seitenteil an mindestens einer der Verbindungsstellen mit einer oberen oder einer unteren Quertraverse verbunden ist.

In einer bevorzugten Ausgestaltung ist ein jeweiliges Sitzgestell-Seitenteil an mindestens einer der Verbindungsstellen mit einem Sitzgestell-Seitenwinkel und/oder der Sitzgestell-Seitenwinkel an mindestens einer der Verbindungsstellen mit einer Oberschiene einer Fahrzeugsitz-Längsverstellung verbunden.

In einer bevorzugten Ausgestaltung sind als miteinander verbundene Strukturteile eine Verbindungsstange mit beidseitig daran angebrachten Hebelelementen, die über jeweilige Verbindungen an der Verbindungsstange befestigt sind, vorgesehen. Dabei kann die beidseitig an der Verbindungsstange vorgesehenen Verbindungen gleichzeitig hergestellt werden. Die Verbindungsstange ist hier z.B. als ein Profilrohr mit einem Innenprofil ausgebildet, wobei für die Verbindung des Profilrohrs mit dem jeweiligen Hebelelemente das Innenprofil an dem jeweiligen Hebelelement mitverschweißt ist.

Vorzugsweise ist das Profilrohr als stranggepresstes Aluminiumrohr oder als stranggepresstes Rohr aus einer Aluminiumlegierung ausgebildet.

In einer Ausgestaltung weißt die Verbindung an mindestens einer der Verbindungsstellen eine durchgehende Schweißnaht, eine regelmäßig und/oder unregelmäßig unterbrochene Schweißnaht oder mehrere punktförmige Schweißungen auf.

In einer Ausgestaltung ist die Verbindung an mindestens einer der Verbindungsstellen mit einem Außenkonus und einem Innenkonus hergestellt.

In einer bevorzugten Ausgestaltung wird bei dem Reibrührschweißen ein Schweißwerkzeug, insbesondere ein dornförmiger Stift verwendet, der zur Erzeugung der Verbindung an der Verbindungsstelle zwischen die miteinander zu verbindenden Struktur- oder Halteteile angeordnet wird und eine Relativbewegung bezogen auf die Struktur- oder Halteteile, insbesondere eine rotierende Relativbewegung, vornimmt.

In einer bevorzugten Ausgestaltung werden zur Herstellung der Verbindung mehrere Schweißwerkzeuge gleichzeitig eingesetzt.

Die obigen Ausgestaltungen und Weiterbildungen des erfindungsgemäßen Fahrzeugssitzes bzw. des erfindungsgemäßen Verfahrens zu dessen Herstellung lassen sich auch auf beliebige und geeignete Art und Weise miteinander kombinieren.

### FIGURENÜBERSICHT

Die vorliegende Erfindung wird nachfolgend anhand der in den schematischen Figuren der Zeichnung angegebenen Ausführungsbeispiele näher erläutert. Es zeigen dabei:
- Fig. 1-1: in schematischer perspektivischer Darstellung einen Reibschweißvorgang;
- Fig. 1-2: in schematischer perspektivischer Darstellung einen orbitalen Reibschweißvorgang;
- Fig. 1-3: in schematischer perspektivischer Darstellung einen Rotations-Reibschweißvorgang;
- Fig. 1-4: in schematischer perspektivischer Darstellung einen Reibrührschweißvorgang;
- Fig. 1a: in einer schematischen Seitenansicht ein Lehnengestell eines Kraftfahrzeugsitzes mit einem Beschlag gemäß dem Stand der Technik;
- Fig. 1b: in einer schematischen Seitenansicht ein Lehnengestell eines Kraftfahrzeugsitzes mit einem Beschlag gemäß der vorliegenden Erfindung;
- Fig. 2a: in einer schematischen Perspektivansicht ein weiteres Lehnengestell eines Kraftfahrzeugsitzes mit einem Beschlag gemäß dem Stand der Technik;
- Fig. 2b: in einer schematischen Perspektivansicht ein Sitzgestell gemäß dem Stand der Technik zur Verbindung mit dem Lehnengestell gemäß der Fig. 2a;
- Fig. 3a: in einer schematischen Perspektivansicht ein Lehnengestell eines Kraftfahrzeugsitzes mit einem Beschlag gemäß der vorliegenden Erfindung;
- Fig. 3b: in einer schematischen Perspektivansicht ein Sitzgestell gemäß der vorliegenden Erfindung zur Verbindung mit dem Lehnengestell gemäß der Fig. 3a;
- Fig. 3c: in einer schematischen Perspektivansicht eine bevorzugte Modifikation des Lehnengestells gemäß der Fig. 3a;
- Fig. 4: in einer teilperspektivischen Darstellung einen Ausschnitt des Sitzgestells gemäß der Fig. 3b;
- Fig. 5: in einer teilperspektivischen Darstellung einen Ausschnitt des Sitzgestells gemäß der Fig. 3b mit dem Lehnengestell gemäß der Fig. 3a, die sich zueinander in einer Montagehilfsposition befinden;
- Fig. 6: eine ausschnittsweise Darstellung des Lehnengestells gemäß der Fig. 3a mit dem Beschlag mit randseitig an diesem ausgebildeten Einführfasen;
- Fig. 7a: in einer schematischen Perspektivansicht ein Lehnengestell gemäß einer weiteren Ausführungsform der vorliegenden Erfindung;
- Fig. 7b: in einer schematischen Perspektivansicht eine Quertraverse Lehnengestells gemäß der Fig. 7a;
- Fig. 8: in einer schematischen Teil-Perspektivansicht eine erfindungsgemäße Verbindung eines Sitzgestell-Seitenteils mit einer Oberschiene einer Fahrzeugsitz-Längsverstellung;
- Fig. 9a: eine perspektivische Ansicht eines Lehnengestell-Seitenteils mit einer anzubringenden Beschlagplatte;
- Fig. 9b: eine weitere perspektivische Ansicht des Lehnengestell-Seitenteils nach Fig. 9a;
- Fig. 9c: eine vergrößerte perspektivische Teilansicht des Lehnengestell-Seitenteils nach Fig. 9a;
- Fig. 9d: eine weitere vergrößerte perspektivische Teilansicht des Lehnengestell-Seitenteils nach Fig. 9c;
- Fig. 9e: eine weitere vergrößerte perspektivische Teilansicht des Lehnengestell-Seitenteils nach Fig. 9b mit angebrachter Beschlagplatte;
- Fig. 10a: eine vergrößerte perspektivische Teilansicht eines weiteren Lehnengestell-Seitenteils mit angebrachter Beschlagplatte;
- Fig. 10b: eine weitere vergrößerte perspektivische Teilansicht des Lehnengestell-Seitenteils nach Fig. 10a;
- Fig. 11: eine perspektivische Teilansicht einer Quertraverse;
- Fig. 12a: eine schematische Teilschnittdarstellung eines Befestigungsabschnitts;
- Fig. 12b: eine Schnittansicht eines Profilrohrs mit Innenprofil;
- Fig. 13a: eine perspektivische Ansicht einer oberen Quertraverse; und
- Fig. 13b: eine weitere perspektivische Ansicht der oberen Quertraverse nach Fig. 13a.

In den Figuren der Zeichnung sind gleiche und funktionsgleiche Elemente, Elementgruppen und Teile - sofern nichts Anderes ausgeführt ist - mit denselben Bezugszeichen versehen.

### AUSFÜHRLICHE BESCHREIBUNG VON BEVORZUGTEN AUSFÜHRUNGSBEISPIELEN

Nachfolgend wird mit Bezug auf die Fig. 1-1 bis 1-4 zunächst auf das Reibschweißen im Sinne der vorliegenden Erfindung im Allgemeinen und auf das orbitale Reibschweißen, Rotations-Reibschweißen und Reibrührschweißen und deren Besonderheiten im Speziellen eingegangen.

Bei einem Reibschweißen im Sinne der vorliegenden Erfindung werden die beiden miteinander zu verbindenden Teile durch Relativbewegung zueinander unter Einwirkung von Druck, bevorzugt senkrecht auf die Kontaktflächen, erwärmt. Zu diesem Zweck können die beiden miteinander zu verbindenden Teile entlang einer Linie oder eines Linienverlaufs relativ zueinander hin- und herbewegt werden oder auch periodisch entlang eines geschlossenen Linienverlaufs bewegt werden.

Ein allgemeines Beispiel eines solchen Reibschweißvorgangs in schematisch in Fig. 1-1 dargestellt. Beispielsweise liegen hier ein Strukturteil 1 und ein daran anzubringendes Halteteil 1' mit einer Fügenaht 50 aneinander. Auf die Anordnung wirken Anpresskräfte F. Das Halteteil 1' führt hier hin- und herbewegende Reibbewegung 54 aus. Es ist auch möglich, dass beide Teile 1 und 1' gegenläufige Reibbewegungen 54 ausführen.

Fig. 1-2 zeigt einen so genannten orbitalen Reibschweißvorgang, bei welchem das Halteteil 1' (hier zylinderförmig) auf dem Strukturteil 1 mit der Fügenaht 50 in einer achtförmigen Reibbewegung 54 unter der Anpresskraft F bewegt wird. Auch andere Bewegungsabläufe sind möglich und denkbar, beispielsweise Beispiel kann das Halteteil 1' gleichzeitig rotieren.

Einen so genannten Rotations-Reibschweißvorgang zeigt Fig. 1-3. Das Halteteil 1' wird mit einer rotierenden Reibbewegung 54 unter der Anpresskraft F auf dem Strukturteil 1 bewegt. Alternativ können die beiden miteinander zu verbindenden Teile 1 und 1' auch relativ zueinander rotiert werden, was insbesondere zur Verbindung eines rotationssymmetrisches, wie beispielsweise eines Rohrs, vorteilhaft ist.

Unter einem Reibschweißen im Sinne der vorliegenden Erfindung ist auch ein so genanntes Reibrührschweißen oder Rührreibschweißen (engl. Friction Stir Welding) zu verstehen. Dieses spezielle Keibschweißverfahren ist in Fig. 1-4 dargestellt, bei der die zwei zu verbindenden Teile 1 und 1' auf einer Unterlage 55 in geeigneter Weise fest aufgespannt sind und in ihrem Verbindungsbereich mit der Fügenaht 50 aneinander liegen. Ein Schweißwerkzeug 52 in Gestalt eines Zylinders mit einem zu diesem koaxial an der Unterseite angeordneten Pin 53 rotiert um seine Längsachse, wird abgesenkt und mit dem Pin 53 gegen die zu verbindenden Teile 1, 1' am Anfang der Fügenaht 50 gedrückt. Durch die Rotation und dabei entstehende Reibung wird der Werkstoff auf beiden Seiten der Fügenaht 50 so erwärmt und gewissermaßen "teigig", dass das Schweißwerkzeug 52 in Richtung der Fügenaht 50 (Pfeile) unter Beibehaltung der Rotation weiter bewegt werden kann. Hinter dem Schweißwerkzeug 52 wird die Schweißnaht 51 gebildet, was mit der mittleren Position des Schweißwerkzeugs 52 gezeigt ist. Die Schulter des Schweißwerkzeugs 52 an der Verbindungsstelle zum Pin 53 wird dabei auf der Fügenaht 50 liegend geführt. Nachdem die Schweißnaht 51 über die gesamte Länge der Fügenaht 50 erstellt worden ist, wird das Schweißwerkzeug 52 entweder senkrecht oder horizontal abgezogen.

Es ist auch möglich, dass mehrere Schweißwerkzeuge 52 und oder Schweißvorgänge gleichzeitig eingesetzt werden, wobei sich eine Zykluszeit erheblich verkürzt.

Das Rotations-Reibschweißen und das Reibrührschweißen eignen sich in besonderer Weise für die Herstellung von Sitzen im Fahrzeugbau und für die Verbindung der zugehörigen Bauteile, welche häufig als Tiefziehteile aus unterschiedlichen Werkstoffen mit Sicken, Kanten, Umbördelungen, Randumkantungen (hinsichtlich Festigkeit, Crasheinwirkung, geringes Gewicht) usw. ausgeführt sind. Da hierbei die Zugänglichkeit von entsprechenden Verbindungswerkzeugen auch aufgrund der komplizierten und aufwändigen 3D-Ausführungen der Sitzkonstruktionen und damit auch deren Halte- und Trageteile meistens sehr eingeschränkt ist, sind diese Schweißverfahren besonders vorteilhaft, zumal sie auch eine sehr sicher Verbindungstechnik darstellen. Eben die Verbindungssicherheit, dass heißt die Verlässlichkeit der Verbindung auch bei extremer Belastung, ist aber vor allem im Sitzbereich ein sehr vorherrschendes Kriterium. Im Extremfall können sehr hohe Kräfte und Drehmomente an den entsprechenden Verbindungsstellen wirken. Trotzdem müssen die Verbindungsstellen aber diese Belastung aufnehmen. Durch die genannten Reibschweißverbindungen wird dies gewährleistet.

Die Fig. 1b zeigt in einer schematischen Seitenansicht ein Lehnengestell 4 gemäß der vorliegenden Erfindung, an dessen Lehnengestell-Seitenwangen 5 Beschläge 8 durch Reibschweißen, wie nachfolgend ausgeführt, vormontiert befestigt sind. Der Beschlag 8 ist im Ausführungsbeispiel nach Art eines separaten Adapterbleches ausgebildet. Zur Verbindung des Beschlags 8 mit einem Sitzgestell können die in der Fig. 1b an dessen unterem Ende dargestellten Bohrungen zur Aufnahme von Verbindungselementen, wie beispielsweise Schrauben oder Nieten, dienen. Grundsätzlich denkbar ist jedoch auch an dieser Stelle eine Verbindung durch Reibschweißen, wie nachfolgend beschrieben. Das untere Ende des Beschlags 8 kann unmittelbar und ohne die herkömmliche Zwischenschaltung eines unteren sitzseitenteilfesten Verbindungsteils (vgl. Bezugszeichen 109b gemäß der Fig. 1a) mit dem Sitzgestell verbunden werden, wodurch Material und Aufwand weiter eingespart wird.

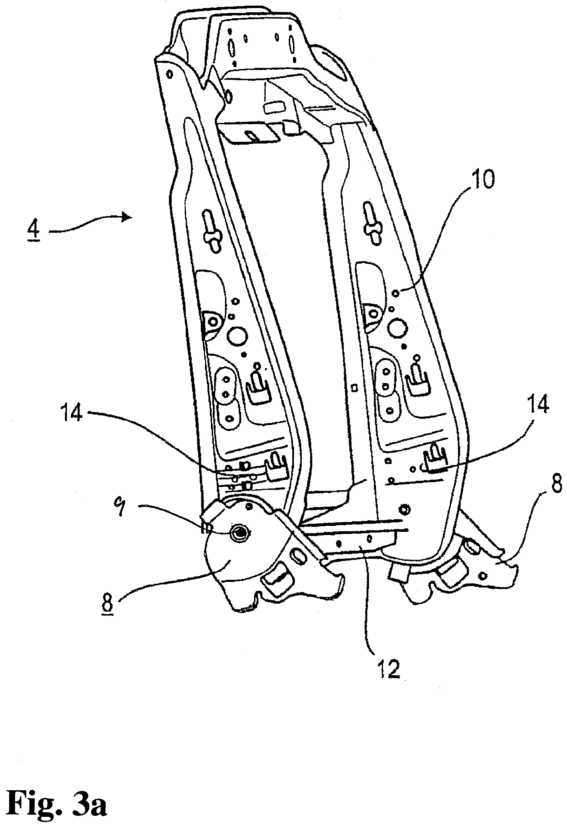

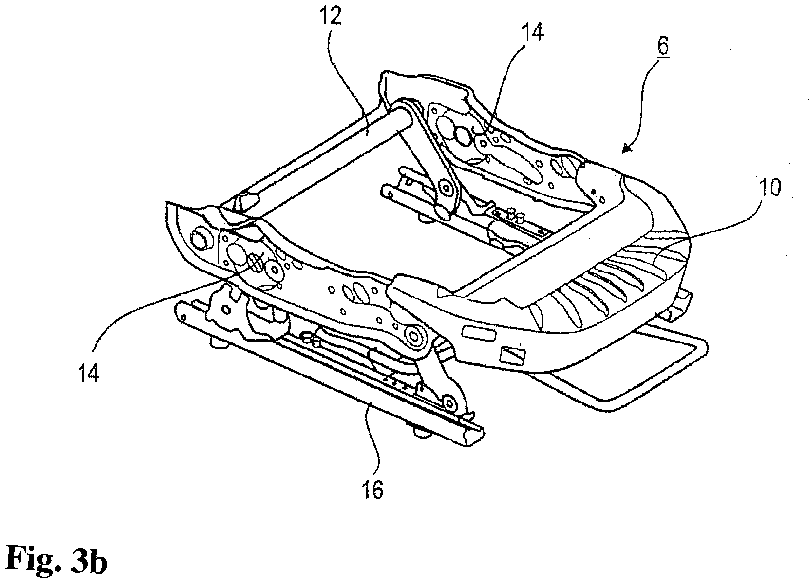

Die Figuren 3a und 3b zeigen Einzelheiten eines weiteren Fahrzeugsitzes gemäß der vorliegenden Erfindung. Im unmittelbaren Vergleich zur Fig. 2a ergibt sich, dass jedenfalls an dem oberen Ende des Beschlags 8 keine Bohrungen zur Verbindung mittels Schrauben oder Nieten mit dem Lehnengestell-Seitenteil 14 vorgesehen sind. Die zugehörigen Verbindungsbereiche können somit erfindungsgemäß deutlich kleiner ausgebildet werden.

Zur Verbindung durch Reibschweißen im Sinne der vorliegenden Anmeldung werden die beiden miteinander zu verbindenden Teile, beispielsweise Lehnengestell-Seitenteil und Beschlag, unter Druckeinwirkung senkrecht auf die Kontaktflächen relativ zueinander bewegt, insbesondere auf einer von den Kontaktflächen aufgespannten Ebene. Durch die entstehende Reibung kommt es zur Erwärmung und schließlich zu einer oberflächlichen Aufweichung der Materialien im Bereich der aneinander reibenden Kontaktflächen. Am Ende des Reibvorgangs werden die beiden miteinander zu verbindenden Teile geeignet positioniert. Diese lässt man dann unter hohem Druck senkrecht auf die Kontaktflächen abkühlen.

Die Relativbewegung der beiden miteinander zu verbindenden Teile kann entlang einer Linie oder eines einfachen Linienverlaufs als Hin- und Herbewegung wiederholt ausgeführt werden. Für eine noch gleichmäßigere Erwärmung kann gemäß weiteren Ausführungsformen die Relativbewegung auch entlang einer geschlossenen geometrischen Kurve, beispielsweise in Form einer "Acht", wiederholt ausgeführt werden (sog. multiorbitales Reibschweißen). Alternativ kann auch zumindest eines der miteinander zu verbindenden Teile rotiert werden, was eine Rotationssymmetrie voraussetzen kann.

Zur Montage des Lehnengestells 4 am Sitzgestell 6 wird das Lehnengestell 4 in etwa in Vertikalrichtung (Z-Richtung) von oben her auf das Lehnengestell 4 aufgesetzt. Die seitlich angebrachten am Lehnengestell 4 vormontierten Beschläge 8 werden hierbei seitlich an den Seitenwangen 14 des Sitzgestells 6 entlang geschoben. Hierdurch wird das Lehnengestell 4 relativ zum Sitzgestell 6 in Querrichtung (Y-Richtung) geführt und ausgerichtet. Die Beschläge 8 bieten hierbei eine gewisse Montagevereinfachung, insbesondere führen sie das Lehnengestell 4 beim Aufsetzen auf das Sitzgestell 6.

Die Positionierung der miteinander zu verbindenden Teile kann gemäß der vorliegenden Erfindung mittels einer externen Lehre oder mittels einer Aufspannvorrichtung zum Halten der miteinander zu verbindenden Teile erfolgen. Diese Aufspannvorrichtung kann zugleich verschieblich ausgelegt sein, um die Relativbewegung der miteinander zu verbindenden Teile zur Erwärmung derselben auszuführen.

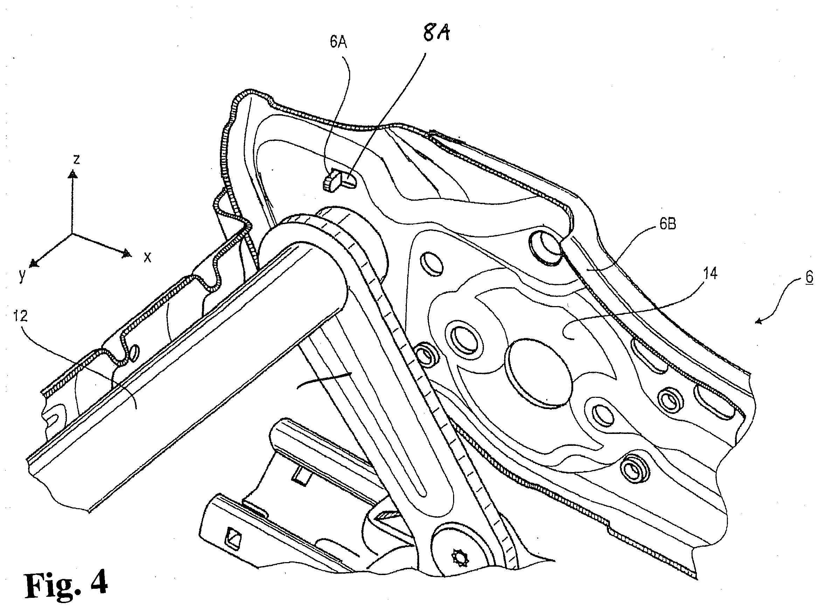

Zur Positionierung miteinander zu verbindenden Teile sowie zur Erleichterung der Montage können am Beschlag 8 sowie am Sitzgestell 6 alternativ auch jeweils Positionierungs- bzw. Montagehilfen vorgesehen. Diese Positionierungs- bzw. Montagehilfen sind hierbei konstruktive Hilfselemente, die einstückig am Beschlag 8 und am Sitzgestell 6 ausgebildet sind. Die Ausgestaltung und Funktionsweise der Montagehilfen werden nachfolgend anhand der Fig. 4 bis Fig. 6 näher erläutert.

Beim Aufstecken des Lehnengestells 4 mit dem daran befestigten Beschlag 8 auf das Sitzgestell 6 werden die beiden Gestellteile 4, 6 automatisch in die definierte Montagehilfsposition gebracht. Die Montagehilfsposition ist hierbei derart ausgebildet, dass Beschlag 8 und Sitzgestell 6 geeignet zueinander ausgerichtet sind, was für einen weiteren Verbindungsvorgang durch Reibschweißen, Laserschweißen oder dergleichen ausreichend ist. Bei Ausführungsformen, bei denen die Verbindung zwischen Beschlag 6 und Sitzgestell 6 mittels Schrauben oder Nieten erfolgt, ist die Montagehilfsposition derart ausgebildet, dass Löcher am Beschlag 8 mit zugeordneten Löchern am Sitzgestell 6 ausgerichtet sind, so dass Schraube oder Niet durch die zueinander ausgerichteten Löcher hindurchgeführt werden kann.

Als Positionierungs- und Montagehilfen sind hierbei am Beschlag eine Randausnehmung 8A sowie eine randseitige Nase 8B vorgesehen. Diese Montagehilfen 8A, 8B werden bereits beim Herstellprozess des Beschlages 8 kostengünstig ausgebildet, beispielsweise bei einem Stanzvorgang, welcher die Außenkontur des Beschlags 8 festlegt.

Am Sitzgestell 6 sind die Montagehilfen gebildet durch einen Querstift 6A sowie eine Querlasche 6B. Der Querstift 6A ist hierbei gebildet durch eine aus der Seitenwange 14 in Querrichtung (Y-Richtung) ausgebogene Lasche. Die Querlasche 6B wiederum ist gebildet durch eine randseitige Umkantung der Seitenwange 14. Diese Umkantung ist über weite Teile der Seitenwange 14 ausgebildet und lediglich im Bereich des Beschlags 8 unterbrochen. Sie weist daher an dieser Stelle eine Art Einführöffnung für den Beschlag 8 auf. Die Breite der Einführöffnung ist and die Breite des Beschlags 8 angepasst und zwar derart, dass die Nase 8B die Umkantung hintergreift.

Die Randausnehmung 8A und der Querstift 6A sowie die Nase 8B und die Querlasche 6B bilden jeweils Montagehilfen-Paare 8A, 6A bzw. 8B, 6B. Diese beiden Paare wirken jeweils zusammen und bilden miteinander einen Formschluss aus. Durch die Randausnehmung 8A und den Querstift 6A wird bereits eine Fixierung des Lehnengestells 4 relativ zum Sitzgestell 6 in Z- sowie in X-Richtung erreicht.

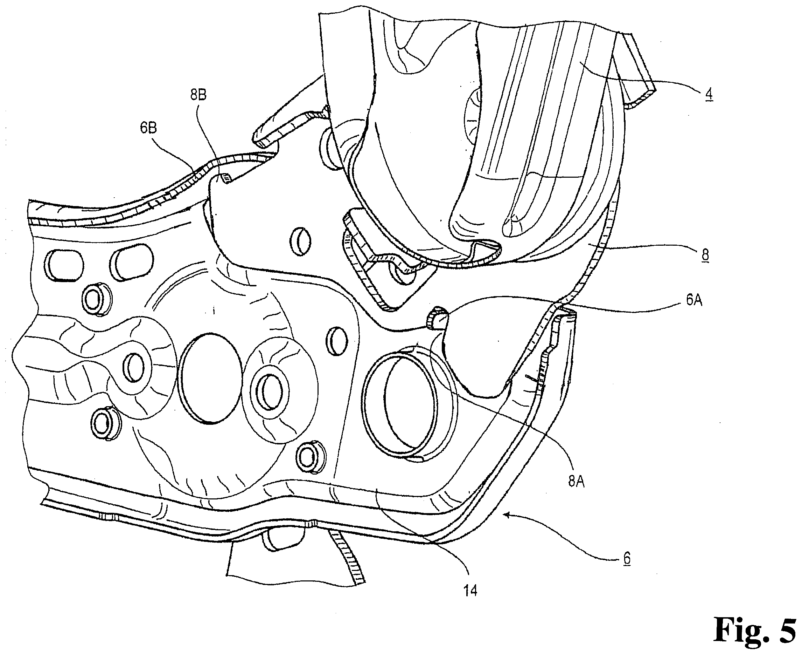

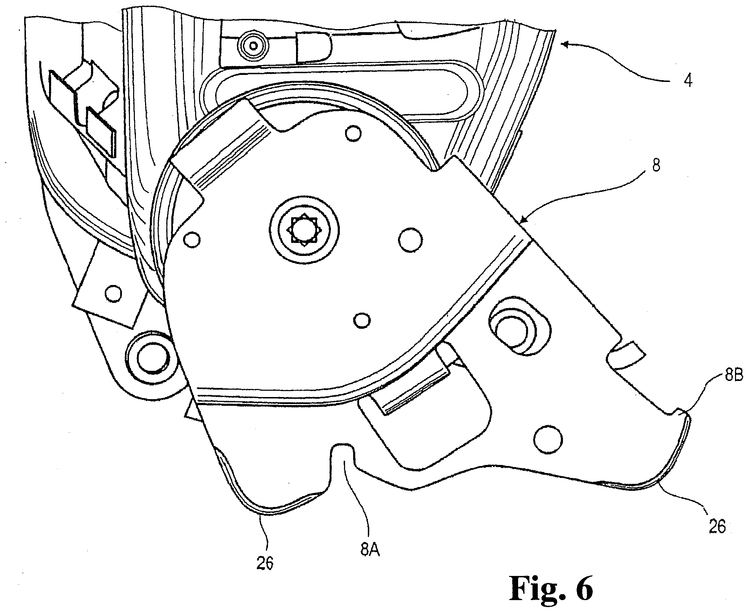

Das zusätzliche Montagehilfenpaar, bestehend aus Nase 8B und Querlasche 6B, dient als Verdrehsicherung, so dass das Lehnengestell 4 nicht aufgrund seines Eigengewichts sich um eine dann durch den Querstift 6A definierte Drehachse nach hinten weg dreht. Insgesamt ist daher durch die Montagehilfen 8A, 6A; 8B, 6B eine sichere, formschlüssige Fixierung in der Montagehilfsposition gewährleistet. Die Fixierung in Y-Richtung wird durch die randseitige Anordnung des Beschlags 8 erreicht. Wie insbesondere aus den Fig. 5 und Fig. 6 zu entnehmen ist, ist der Beschlag 8 am Lehnengestell 4 außenseitig angeordnet und ist zu seinem unteren, zum Sitzgestell 6 orientierten Teilbereich nach innen eingebogen, so dass der Beschlag 8 an der Innenseite der Seitenwange 14 des Sitzgestells 6 anliegt. Um ein einfaches Einführen der beiden gegenüberliegende Beschläge 8 zwischen die gegenüberliegenden Seitenwangen 14 des Sitzgestells 6 zu ermöglichen, sind am Beschlag 8 randseitig Einführfasen 26 ausgebildet, die an den in etwa in z-Richtung hervorstehenden Teilbereichen ausgebildet sind, mit denen voraus der Beschlag 8 eingeführt wird. Zur Ausbildung der Einführfasen 26 ist eine umlaufende Aussenkante des Beschlags 8 zumindest bereichsweise abgeschrägt.

Bei der Montage wird nunmehr derart vorgegangen, dass das Lehnengestell 4 von oben zunächst in etwa entgegen der Z-Richtung auf das Sitzgestell 6 aufgesetzt wird. Hierbei ist eine Schub-Drehbewebung, also eine mit einer kleinen Drehbewegung überlagerte Einschubbewegung vorgesehen. Dadurch wird zunächst der Anschlag 8 mit seiner Nase 8B voraus unter die die Querlasche 6 bildende Umkantung des Sitzgestells 8 geführt, um hier einen formschlüssigen Hintergriff auszubilden. Anschließend wird die Randausnehmung 8A über den Querstift 6A geschoben bzw. geschwenkt. Der Querstift 6A liegt in der Randausnehmung 8A an und die Nase 8B stützt sich an der Unterseite der Querlasche 6B ab. Durch einfaches Aufsetzen des Lehnengestells 4 wird daher eine Montagehilfsposition eingenommen, in der die beiden Gestellteile 4, 6 in ihrer Position zueinander fixiert sind. Durch das Eigengewicht des Lehnengestells 4 wird diese Montagehilfsposition beibehalten.

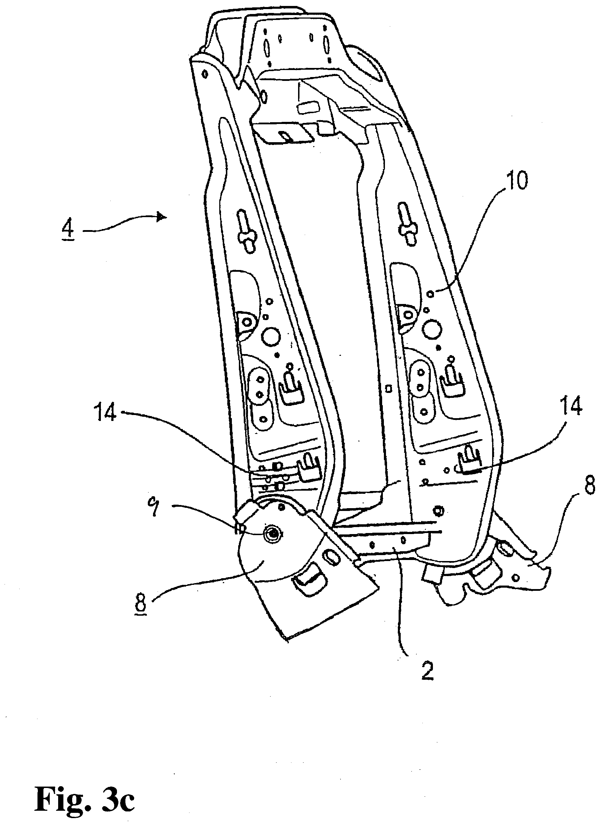

Bei Ausführungsformen, bei denen die Verbindung zwischen Beschlag 8 und Sitzgestell 6 mittels Schrauben oder Nieten erfolgt, kann die weitere Positionierung der miteinander zu verbindenden Teile in die Endposition so erfolgen, wie in der DE 20 2007 005 182 U1 der Anmelderin ausführlich beschrieben, deren gesamter Inhalt hiermit im Wege der Bezugnahme ausdrücklich in dieser Anmeldung mit beinhaltet sei. Bei Ausführungsformen, bei denen die Positionierung der miteinander zu verbindenden Teile in die Endposition in anderer Weise erfolgt, beispielsweise mittels einer externen Lehre oder mittels einer Aufspannvorrichtung, braucht das vorstehend beschriebene zusätzliche Montagehilfenpaar nicht vorgesehen sein, sodass insbesondere der untere Rand des Beschlags 8 glatt, d.h. ohne Ausnehmungen und Vorsprünge, ausgebildet sein kann, wie beispielhaft in der Fig. 3c dargestellt.

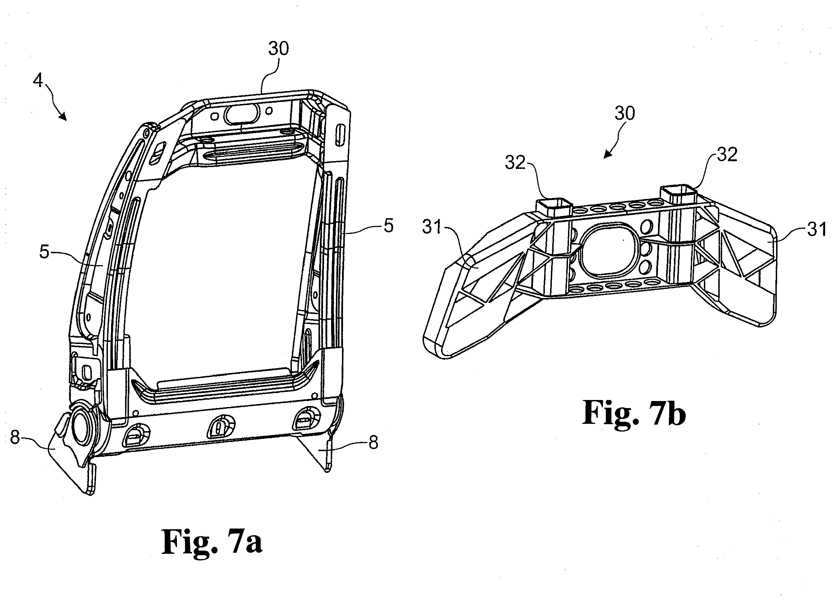

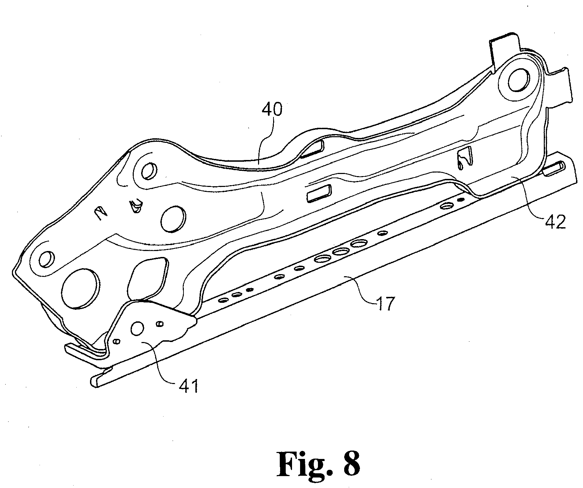

Anhand der Figuren 7 und 8 werden nachfolgend weitere Ausführungsbeispiele für Verbindungen mittels Reibschweißen im Kraftfahrzeugsitzbereich beschrieben. Gemäß der Fig. 7a ist zusätzlich zu den beiden Beschlägen 8 auch die obere Quertraverse 30, welche die beiden Lehngestell-Seitenteile 5 miteinander verbindet, mit den Lehnengestell-Seitenteilen 5 durch Reibschweißen verbunden. Hierzu sind an den beiden Seitenflügeln 31 (vgl. Fig. 7b) der oberen Quertraverse 30 geeignete flächige Verbindungsbereiche vorgesehen, die unter Reiben und Druckeinwirkung mit zugeordneten und korrespondierend ausgebildeten Verbindungsbereichen auf den Innenflächen der beiden Lehnengestell-Seitenteilen 5 verbunden werden.

Die Fig. 8 zeigt als weitere Anwendung einer Verbindung durch Reibschweißen die Verbindung eines Sitzgestell-Seitenwinkels 40, der am unteren Ende eines Sitzgestells vorgesehen ist, mit einer Oberschiene 17 einer Schienenführung zur Sitzlängsverstellung eines Fahrzeugsitzes. Die Verbindung zwischen Sitzgestell-Seitenwinkel 40 und Oberschiene 17 erfolgt dabei an den jeweils eben und flächig ausgebildeten Auflagebereichen 41, 42, die vollflächig mit der Oberseite der Oberschiene verbunden sind. Der untere Rand des Sitzgestell-Seitenwinkels 40 ist dabei rechtwinklig umgefalzt, unter Ausbildung der beiden Auflagebereichen 41, 42, sodass die Krafteinleitung senkrecht auf die Oberseite der Oberschiene 17 zum Reibschweißen besonders effektiv erfolgen kann.

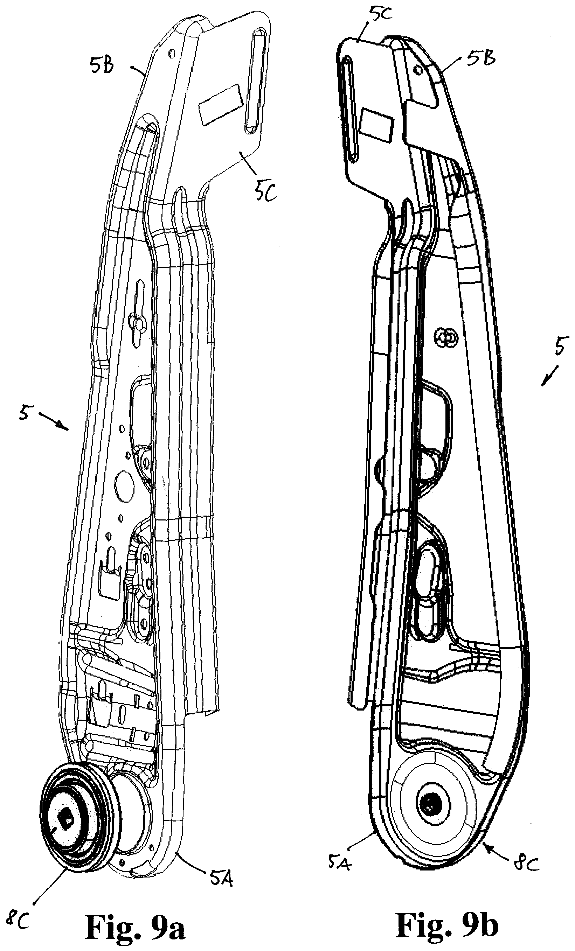

Fig. 9a und 9b illustrieren perspektivische Ansichten eines Lehnengestell-Seitenteils 5 mit einer anzubringenden Beschlagplatte 8C.

Das Lehnengestell-Seitenteil 5 (ähnlich zu Fig. 3c) weist einen unten liegenden Beschlagabschnitt 5A zur Anbringung der Beschlagplatte 8C und ein oben liegendes Kopfende 5B mit einem Anschlussabschnitt 5C für die obere Quertraverse 30 (siehe Fig. 7a), die weiter unten noch erläutert wird.

Fig. 9a zeigt die Anbauseite der Beschlagplatte 8C, welche ein rotationssymmetrisches Teil ist und sich somit für einen Rotations-Reibschweißvorgang wie in Fig. 1-3 illustriert eignet. Fig. 9b zeigt das Lehnengestell-Seitenteil 5 von der zur Anbauseite der Beschlagplatte 8C rückwärtige Seite.

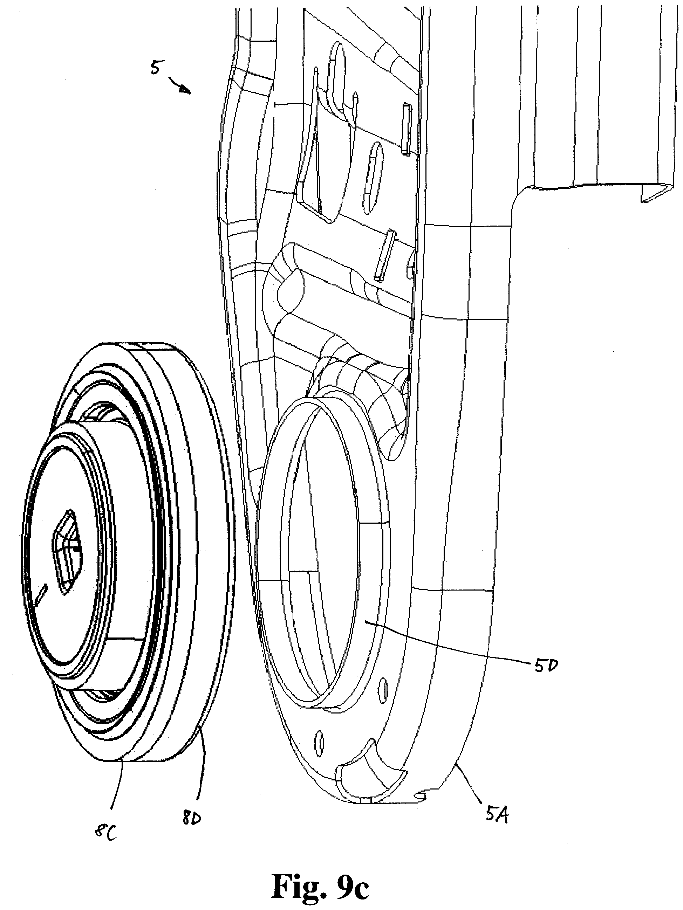

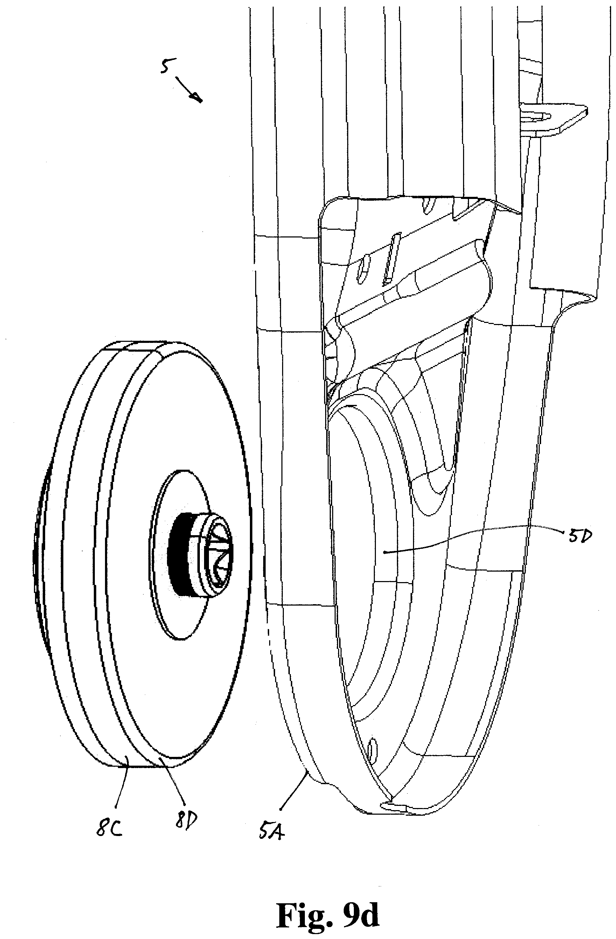

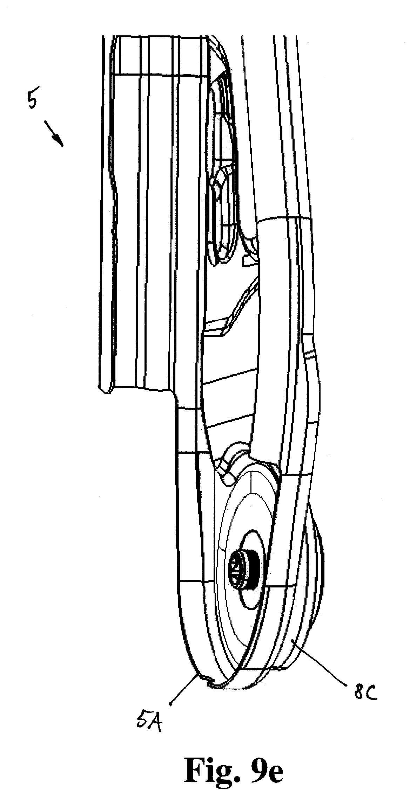

Bei einem Aufprall bzw. Crash eines nicht gezeigten Fahrzeugs, in welches ein Sitz mit diesem Lehnengestell-Seitenteil 5 eingebaut ist, müssen die dabei auftretenden Kräfte, insbesondere Drehmomente, in die anzubringende Beschlagplatte 8C übertragen werden. Zur Beherrschung von Verwindungsmomenten und weiteren Kräften ist das Lehnengestell-Seitenteil 5 mit entsprechenden Sicken, Randumkantungen usw. ausgeführt. Dies ist in Fig. 9c in einer vergrößerten perspektivischen Ansicht dargestellt. Im Bereich des Beschlagabschnitts 5A weist das Lehnengestell-Seitenteil 5A eine Öffnung mit einem hervorstehenden Durchzug 5D auf, welcher mit der Unterseite der Beschlagplatte 8C bei einem Rotations-Reibschweißvorgang verschweißt wird. Dazu wird die Beschlagplatte 8C in Rotation versetzt und mit einer Aufpresskraft auf den Beschlagabschnitt 5A auf den Durchzug 5D gepresst. Der Durchzug 5D verbindet sich dabei mit der Beschlagplatte 8C, vorzugsweise in deren Randbereich, welcher dazu mit einer Fase 8D versehen ist. Die Fase 8D und die plane Unterseite der Beschlagplatte 8A sind aus Fig. 9d deutlich erkennbar. Der Durchzug 5D ist so gestaltet, dass er eine möglichst randnahe Verbindung mit der Beschlagplatte 8C beim Verschweißen bildet. Fig. 9e zeigt die angeschweißte Beschlagplatte 8C von der Rückseite her.

In einer alternativen Ausführung kann die Beschlagplatte 8C auch mit einem Reibrührschweißvorgang ähnlich wie in Fig. 1-4 gezeigt an dem Beschlagabschnitt 5A des Lehnengestell-Seitenteils 5 angebracht werden. Dazu kann das Schweißwerkzeug 52 kreisförmig um den Umfang der Beschlagplatte 8C geführt werden. Es ist auch möglich, dass die Beschlagplatte 8C nur in Teilbereichen verschweißt wird. Auch eine punktförmige Ausführung der Schweißnähte ist möglich (dies gilt für alle Reibrührschweißvorgänge an Struktur- und Halteteilen, die hier beschrieben sind). Die teilweise bzw. punktförmig ausgeführten Reibschweißverbindungen richten sich nach dem Kraftverlauf und/oder der zu erzeugenden Festigkeitseigenschaften vorher festgelegter Abschnitte des Lehnengestell-Seitenteils 5 bzw. des entsprechenden Struktur- und Halteteils.

Die Beschlagplatte 8C kann (hier stellvertretend für alle Halteteile gemeint) den Beschlagabschnitt 5A (hier stellvertretend für alle Strukturteile gemeint) auch verstärken.

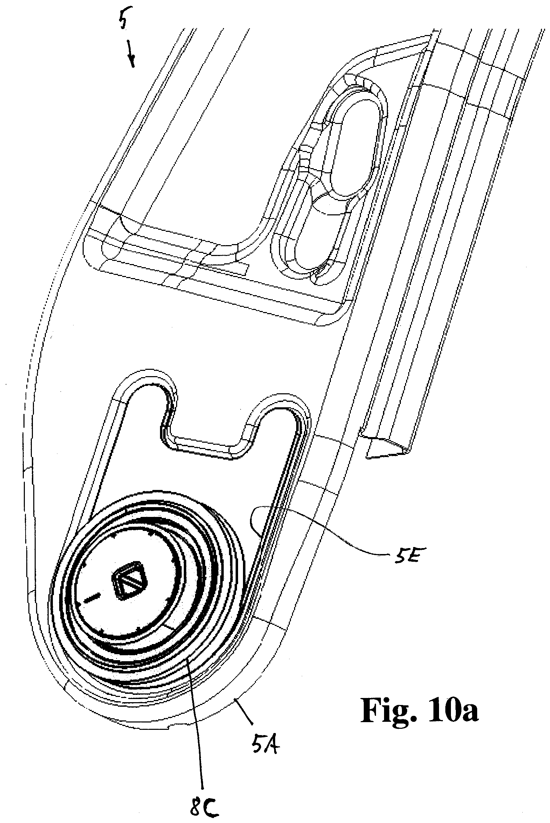

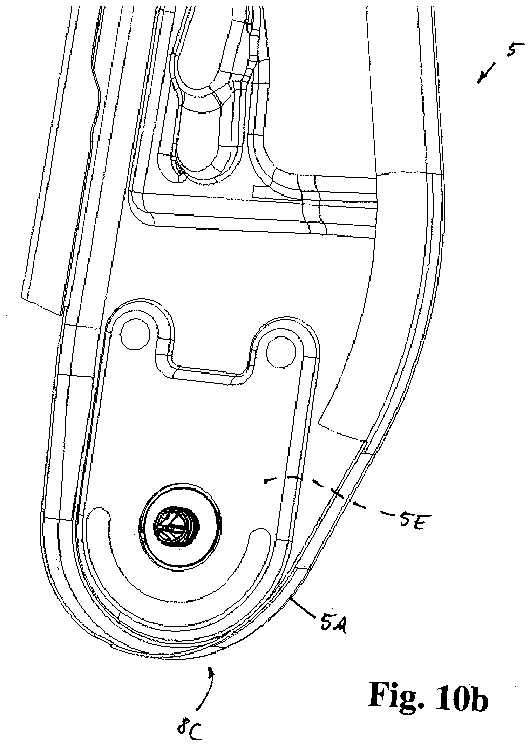

Fig. 10a illustriert eine vergrößerte perspektivische Teilansicht eines weiteren Lehnengestell-Seitenteils 5 mit angebrachter Beschlagplatte 8C und Fig. 10b die Rückansicht dazu.

In dieser Variation weist der Beschlagabschnitt 5A des Lehnengestell-Seitenteils 5 eine eingearbeitete Aufnahme 5E auf, welche im unteren Bereich an die Außenkontur der Beschlagplatte 8C angepasst ist, im oberen Bereich jedoch anders ausgebildet ist. Bei diesem Beispiel wird die Reibschweißung in dem an die Beschlagplatte 8C angepassten Bereich vorgenommen. Dies kann von oben (Fig. 10a) oder von der Rückseite her (Fig. 10b) oder beidseitig erfolgen. Es ist auch möglich, dass eine Drehmomentübertragung nicht über die Schweißnaht erfolgt, sondern über einen Formschluss zwischen Beschlagplatte 8C und korrespondierender Wandung der Aufnahme 5E. Dazu kann der Formschluss durch eine entsprechende (z. B. unrunde) Profilierung gegeben sein. Auch eine Stabilisierung des Lehnengestell-Seitenteils 5 ist dadurch möglich.

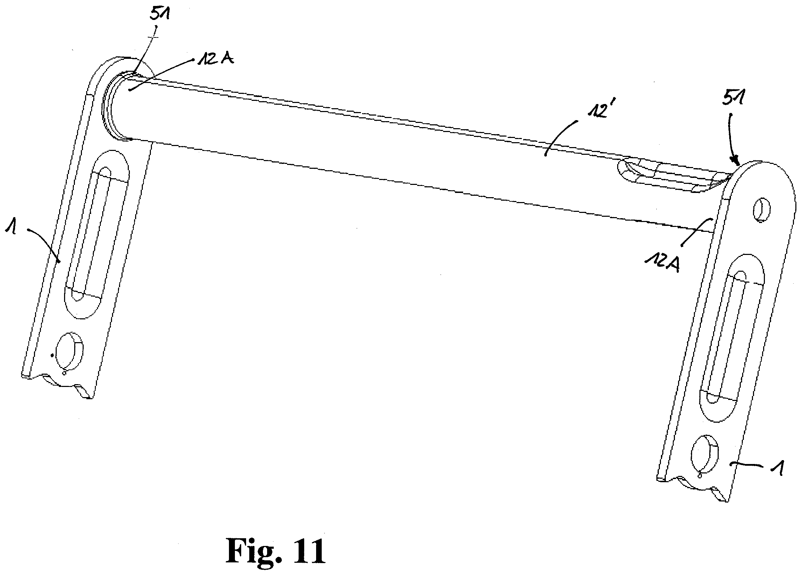

Fig. 11 zeigt eine perspektivische Teilansicht einer Quertraverse 12', die an ihren Enden mit jeweils einem Befestigungsabschnitt 12A versehen ist. Jeder Befestigungsabschnitt 12A ist mit einer in einem Reibschweißverfahren hergestellten Schweißnaht 51 mit einem Strukturbauteil 1, hier zum Beispiel Seitenteile eines Sitzgestellrahmens, verbunden. Das Reibschweißverfahren kann sowohl ein umlaufendes Reibrührschweißen als auch ein Rotations-Reibschweißen sein. Beim Rotations-Reibschweißvorgang wird vorzugsweise die Quertraverse 12' rotiert und gleichzeitig an beiden Befestigungsabschnitten 12A mit den Strukturteilen 1 verschweißt. Dies ist besonders vorteilhaft, da ansonsten im Falle eines bereits angeschweißten Strukturteils 1 bei einem nachfolgenden Rotations-Reibschweißvorgang zum Anschweißen an das zweite Strukturteil 1 eine Rotation der Quertraverse 12' mit einer Unwucht erfolgen würde.

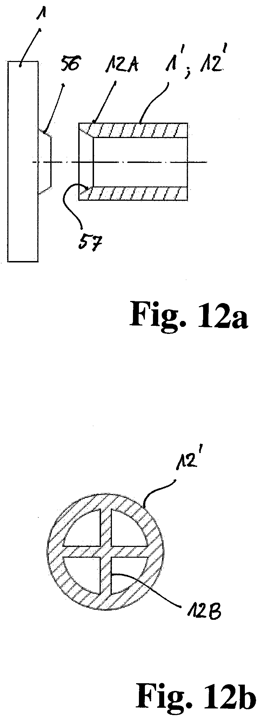

Fig. 12a zeigt eine schematische Teilschnittdarstellung eines Befestigungsabschnitts 12A eines Halteteils 1' allgemein oder der Quertraverse 12', welche hier rotationssymmetrisch sind. Das Strukturteil 1 weist zur Befestigung einen Außenkonus 56 und das Halteteil 1' einen dazu korrespondierenden Innenkonus auf, wodurch die Reibflächen und somit die Schweißnähte vergrößert sind.

Es ist weiterhin möglich, dass das Halteteil 1' und die Quertraverse 12' als Profilrohre ausgebildet sind. Dies ist zum Beispiel in Form von stranggepressten Aluminiumprofilen möglich. Besonders vorteilhaft sind Rohre mit Innenprofil 12B, zum Beispiel wie in Fig. 12b gezeigt, bei einer Rotations-Reibschweißung, da hierbei nicht nur der Außenmantel, sondern auch das Innenprofil 12B mit dem Strukturteil 1 verschweißt wird, was bei einer normalen Schweißung so nicht möglich ist.

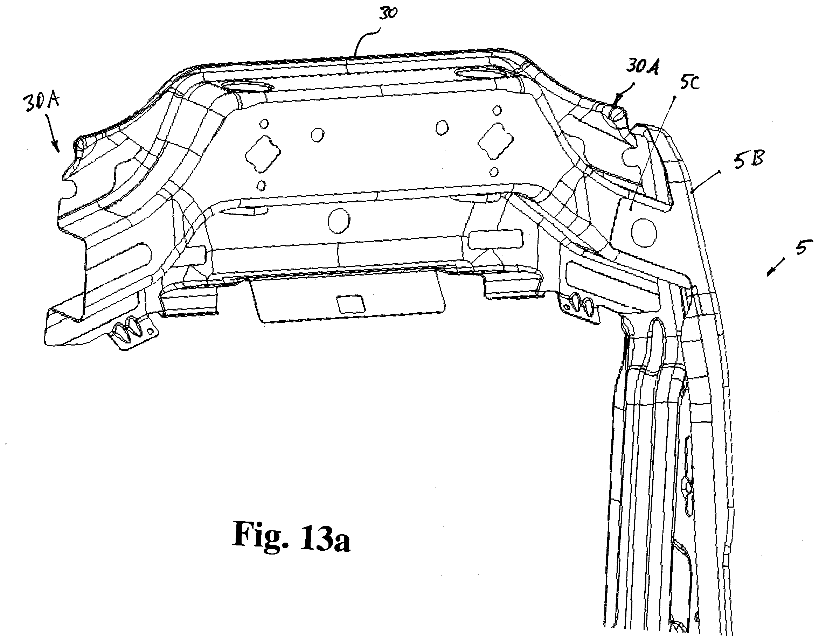

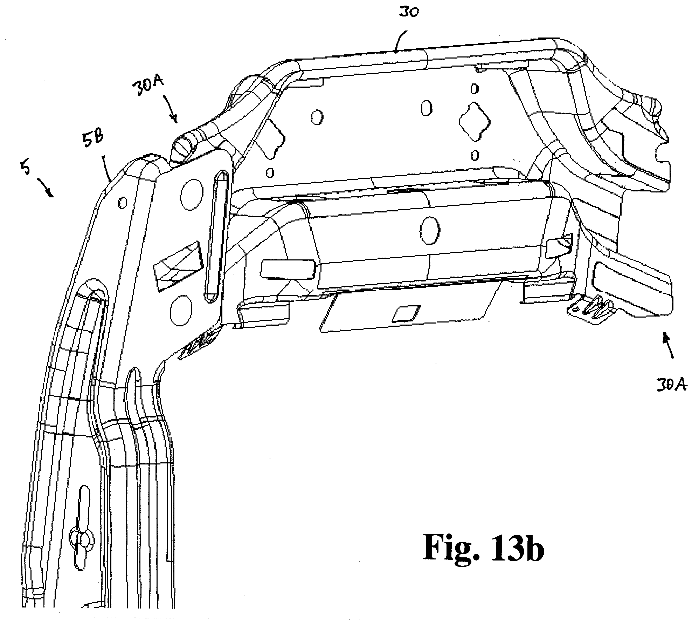

Fig. 13a und 13b zeigen perspektivische Ansichten einer oberen Quertraverse 30 mit Verbindungsabschnitten 30A, wobei nur ein Verbindungsabschnitt 30A mit einem Anschlussabschnitt 5C eines Kopfendes 5B eines Lehnengestell-Seitenteils 5 durch einen Reibschweißvorgang verbunden ist. In dem hier gezeigten Beispiel wird jeweils ein Verbindungsabschnitt 30A mit einem Anschlussabschnitt 5C überlappend mit einem Reibrührschweißverfahren (Fig. 1-4) verschweißt. Aber auch ein Reibschweißen nach Fig. 1-1 kann möglich sein.

Die vorliegende Erfindung sei nicht auf die vorstehenden Ausführungsbeispiele beschränkt, sondern lässt sich auf beliebige Art und Weise modifizieren, ohne vom Gegenstand der vorliegenden Erfindung abzuweichen.

Insbesondere kann das Reibschweißverfahren auf das Verbinden von beliebigen und nicht notwendigerweise die oben genannten Materialen angewendet werden. Durch Reibschweißen können gemäß der vorliegenden Anmeldung insbesondere Teile aus unterschiedlichen Materialien miteinander verbunden werden. Beispielhaft seien nachfolgend die folgenden Materialpaarungen angeführt:
- Stahl, insbesondere hochfester Stahl, mit Aluminium, Aluminiumlegierung oder Magnesiumlegierung;
- Metall, beispielsweise Stahl, Aluminium, Aluminiumlegierung oder Magnesiumlegierung, mit einem Kunststoff, insbesondere auch einem faserverstärkten Kunststoff, oder einem Verbundmaterial

So lassen sich durch das Reibschweißverfahren beliebige und nicht notwendigerweise die oben genannten Teile miteinander verbinden. Durch Reibschweißen können gemäß der vorliegenden Anmeldung insbesondere die folgenden Teile eines Kraftfahrzeugsitzes miteinander verbunden werden:
- Lehnengestell, beispielsweise aus Aluminium, Aluminiumlegierung oder Magnesiumlegierung, und Sitzbeschlag, beispielsweise aus einem hochfesten Stahl (vgl. Fig. 1b, 3a/3b, 7a);
- Sitzbeschlag, beispielsweise aus einem hochfesten Stahl, und Sitzgestell, beispielsweise aus Aluminium, Aluminiumlegierung oder Magnesiumlegierung;
- Lehnengestell oder Sitzgestell mit Quertraverse (vgl. Fig. 3a, 7a);
- Sitzgestell-Seitenwinkel, beispielsweise aus Aluminium, Aluminiumlegierung oder Magnesiumlegierung, mit einer Schienenführung einer Sitz-Längsverstellung, beispielsweise aus einem hochfesten Stahl (vgl. Fig. 8);
- Segment oder Hebel, insbesondere aus einem Stahl, mit einem von diesem gehaltenen und quer verlaufenden Rohr, beispielsweise aus Aluminium, wie beispielsweise eine Höhenverstellwelle eines Kraftfahrzeugsitzes (vgl. Fig. 4, Bezugszeichen 12); hierbei kann die Erwärmung der miteinander zu verbindenden Teile auch durch Rotieren erreicht werden, beispielsweise durch Rotieren des Rohrs um seine Längsachse und/oder des Segments oder Hebels um einen in einer Aufnahme zur Aufnahme des Rohrs befindliche Drehachse.

Weitere Material- und Teilepaarungen, die mittels Reibschweißen im Sinne der vorliegenden Anmeldung im Kraftfahrzeugsitzbereich miteinander verbunden werden können, werden dem Fachmann auf diesem Gebiet beim Studium der vorstehenden Beschreibung ohne weiteres ersichtlich sein.

Natürlich können die verschiedenen oben genannten Reibschweißverfahren, wie zum Beispiel das multiorbitale Reibschweißen, Reibrührschweißen und dergleichen auch miteinander kombiniert werden.

Die Erfindung ist insbesondere vorteilhaft für die Herstellung von Fahrzeugsitzen von Personenkraftfahrzeugen, lässt sich natürlich aber auch bei Lastkraftfahrzeugen und anderen Fahrzeugen einsetzen.

### Bezugszeichenliste

- 1: Strukturteil
- 1': Halteteil
- 2: Fahrzeugsitz
- 4: Lehnengestell
- 5: Lehnengestell-Seitenteil
- 5A: Beschlagabschnitt
- 5B: Kopfende
- 5C: Anschlussabschnitt
- 5D: Durchzug
- 5E: Aufnahme
- 6: Sitzgestell
- 6A: Querstift
- 6B: Querlasche
- 8: Beschlag
- 8A: Randausnehmung
- 8B: Nase
- 8C: Beschlagplatte
- 8D: Fase
- 9: Drehachse / Beschlagmechanik
- 10: Tragarm
- 12, 12': Quertraverse
- 12A: Befestigungsabschnitt
- 12B: Innenprofil
- 14: Seitenwange
- 16: Schienenführung
- 17: Oberschiene
- 18: Schraube
- 22: Löcher
- 23: Löcher
- 26: Einführfase
- 30: Obere Quertraverse
- 30A: Verbindungsabschnitt
- 31: Quertraversen-Seitenteil
- 32: Kopfstützrohr-Hülse
- 40: Sitzgestell-Seitenwinkel
- 41: Vorderer Auflagebereich
- 42: Hinterer Auflagebereich
- 50: Fügespalt
- 51: Schweißnaht
- 52: Schweißwerkzeug
- 53: Pin
- 54: Reibbewegung
- 55: Unterlage
- 56: Außenkonus
- 57: Innenkonus
- 102: Fahrzeugsitz
- 104: Lehnengestell
- 106: Sitzgestell
- 107: Drehachse
- 108: Beschlag
- 109a: Oberes sitzseitenteilfestes Verbindungsteil
- 109b: Unteres sitzseitenteilfestes Verbindungsteil
- 110: Tragarm
- 112: Quertraverse
- 114: Seitenwange
- 116: Schienenführung
- 118: Schraube / Niet
- 122: Löcher
- 123: Löcher
- 124: Löcher
- 126: Einführfase
- F: Anpresskraft

## Patentansprüche

1. Fahrzeugsitz, insbesondere für Kraftfahrzeuge,
mit einer Mehrzahl von Struktur- oder Halteteilen (1, 1', 5, 12, 14, 30, 40), die an mindestens einer Verbindungsstelle miteinander oder mit einem weiteren Teil verbunden sind, wobei die Verbindung an mindestens einer der Verbindungsstellen durch Reibschweißen, wobei das Reibschweißen Ultraschallschweißen nicht umfasst, hergestellt ist, wobei eines der Struktur- oder Halteteile (1, 1', 5, 12, 14, 30, 40) als ein Lehnengestell-Seitenteil (5) ausgebildet ist, wobei das Lehnengestell-Seitenteil (5) an mindestens einer der Verbindungsstellen mit einem Beschlag (8) zur Kopplung mit einem Sitzgestell (6) verbunden ist, wobei an dem Lehnengestell-Seitenteil (5) und dem Beschlag (8) Montagehilfen (6A, 8A; 6B, 8B) vorgesehen sind, die ein Montagehilfen-Paar bilden und formschlüssig ineinander greifen und derart ausgebildet sind, dass das Lehnengestell-Seitenteil (5) und der Beschlag (8) zum Ausführen eines Reibschweißprozesses über eine vorbestimmte Distanz relativ zueinander bewegbar sind und nach Abschluss einer der Erwärmung der miteinander zu verbindenden Abschnitte dienenden Bewegungsphase des Reibschweißprozesses durch gegenseitigen Anschlag der Montagehilfen in einer vorbestimmten Lage relativ zueinander positioniert sind.

2. Fahrzeugsitz nach Anspruch 1,
wobei die Verbindung an mindestens einer der Verbindungsstellen durch Relativbewegung der miteinander zu verbindenden Struktur- oder Halteteile (1, 1', 5, 12, 14, 30, 40) hergestellt ist, wobei die Relativbewegung insbesondere durch Hin- und Herbewegung der miteinander zu verbindenden Struktur- oder Halteteile (1, 1', 5, 12, 14, 30, 40), bevorzugt innerhalb einer Ebene, durch Rotieren von zumindest einem der miteinander zu verbindenden Struktur- oder Halteteile oder durch multiorbitales Reibschweißen hergestellt ist.

3. Fahrzeugsitz nach einem der vorhergehenden Ansprüche,
wobei die Verbindung an mindestens einer der Verbindungsstellen durch Reibrührschweißen hergestellt ist.

4. Fahrzeugsitz nach einem der vorhergehenden Ansprüche,
wobei die Verbindung zur Übertragung von Drehmomenten zwischen den zu verbindenden Struktur- oder Halteteilen (1, 1', 5, 12, 14, 30, 40), insbesondere randnah oder nahe der Stelle des höchstens Drehmomentes vorgesehen ist.

5. Fahrzeugsitz nach einem der vorhergehenden Ansprüche,
wobei die miteinander verbundenen Struktur- oder Halteteile (1, 1', 5, 12, 14, 30, 40) aus unterschiedlichen Materialien bestehen.

6. Fahrzeugsitz nach einem der vorhergehenden Ansprüche,
wobei die miteinander verbundenen Strukturteile (1, 1', 5, 12, 14, 30, 40) die tragende Struktur eines Lehnengestells (4) ausbilden.

7. Fahrzeugsitz nach einem der vorhergehenden Ansprüche,
wobei das Lehnengestell-Seitenteil (5) an mindestens einer der Verbindungsstellen mit einer oberen (30) oder einer unteren Quertraverse verbunden ist und/oder wobei das Sitzgestell-Seitenteil (14) an mindestens einer der Verbindungsstellen mit einem Sitzgestell-Seitenwinkel (40) und/oder der Sitzgestell-Seitenwinkel (40) an mindestens einer der Verbindungsstellen mit einer Oberschiene (17) einer Fahrzeugsitz-Längsverstellung verbunden ist bzw. sind und/oder wobei als miteinander verbundene Strukturteile (1, 1', 5, 12, 14, 30, 40) eine Verbindungsstange (12') mit beidseitig daran angebrachten Hebelelementen (1), die über jeweilige Verbindungen an der Verbindungsstange (12') befestigt sind, aufweist.

8. Fahrzeugsitz nach einem der vorhergehenden Ansprüche,
wobei die Verbindung an mindestens einer der Verbindungsstellen mit einem Außenkonus (56) und einem Innenkonus (57) hergestellt ist.

9. Verfahren zum Herstellen eines Fahrzeugsitzes, insbesondere für Kraftfahrzeuge, insbesondere eines Fahrzeugssitzes nach einem der Ansprüche 1 bis 8 mit den Schritten:
Bereitstellen mindestens zweier Struktur- oder Halteteile (1, 1', 5, 12, 14, 30, 40) für ein Fahrzeugsitz;
Verbinden von jeweils zweier Struktur- oder Halteteilen (1, 1', 5, 12, 14, 30, 40) miteinander oder mit einem weiteren Teil an mindestens einer Verbindungsstelle, wobei die die Verbindung an mindestens einer der Verbindungsstellen durch Reibschweißen hergestellt wird, wobei das Reibschweißen Ultraschallschweißen nicht umfasst, wobei eines der Struktur- oder Halteteile (1, 1', 5, 12, 14, 30, 40) als ein Lehnengestell-Seitenteil (5) ausgebildet ist, wobei das Lehnengestell-Seitenteil (5) an mindestens einer der Verbindungsstellen mit einem Beschlag (8) zur Kopplung mit einem Sitzgestell (6) verbunden wird, wobei an dem Lehnengestell-Seitenteil (5) und dem Beschlag (8) Montagehilfen (6A, 8A; 6B, 8B) vorgesehen werden, die ein Montagehilfen-Paar bilden und formschlüssig ineinander greifen und derart ausgebildet sind, dass das Lehnengestell-Seitenteil (5) und der Beschlag (8) zum Ausführen eines Reibschweißprozesses über eine vorbestimmte Distanz relativ zueinander bewegt werden und nach Abschluss einer der Erwärmung der miteinander zu verbindenden Abschnitte dienenden Bewegungsphase des Reibschweißprozesses durch gegenseitigen Anschlag der Montagehilfen in einer vorbestimmten Lage relativ zueinander positioniert werden.

10. Verfahren nach Anspruch 9,
wobei die Verbindung an mindestens einer der Verbindungsstellen durch Relativbewegung der miteinander zu verbindenden Struktur- oder Halteteile (1, 1', 5, 12, 14, 30, 40) hergestellt wird, wobei die Relativbewegung insbesondere durch Hin- und Herbewegung der miteinander zu verbindenden Struktur- oder Halteteile (1, 1', 5, 12, 14, 30, 40), bevorzugt innerhalb einer Ebene, durch Rotieren von zumindest einem der miteinander zu verbindenden Struktur- oder Halteteile (1, 1', 5, 12, 14, 30, 40) oder durch multiorbitales Reibschweißen erfolgt.

11. Verfahren nach einem der vorherigen verfahrensbezogenen Ansprüchen,
wobei bei einem Rotations-Reibschweißen von Verbindungen an sich gegenüberliegenden Enden von Teilen, vorzugsweise von Rohren und Stangen, mit jeweils einem Strukturteil (1) das Teil mit den sich gegenüberliegenden Enden rotiert wird.

12. Verfahren nach einem der vorherigen verfahrensbezogenen Ansprüchen,
wobei an einer Verbindungsstange (12') beidseitig über jeweilige Verbindungen (51) jeweils ein Hebelelement (1) angebracht wird, wobei die beiden beidseitig an der Verbindungsstange (12') vorgesehenen Verbindungen (51) gleichzeitig hergestellt werden.

13. Verfahren nach einem der vorherigen verfahrensbezogenen Ansprüchen,
wobei die Verbindung an mindestens einer der Verbindungsstellen durch ein Reibrührschweißen (52, 53) hergestellt wird.

14. Verfahren nach Anspruch 13, wobei bei dem Reibrührschweißen (52, 53) ein Schweißwerkzeug, insbesondere ein dornförmiger Stift, verwendet wird, der zur Erzeugung der Verbindung an der Verbindungsstelle zwischen die miteinander zu verbindenden Struktur- oder Halteteile (1, 1', 5, 12, 14, 30, 40) angeordnet wird und eine Relativbewegung bezogen auf die Struktur- oder Halteteile (1, 1', 5, 12, 14, 30, 40), insbesondere eine rotierende Relativbewegung, vornimmt.

15. Verfahren nach einem der vorherigen verfahrensbezogenen Ansprüchen,
wobei eine Verbindung zur Übertragung von Drehmomenten randnah oder nahe der Stelle des höchstens Drehmomentes hergestellt wird.

16. Verfahren nach einem der vorherigen verfahrensbezogenen Ansprüchen, wobei die miteinander zu verbindenden Struktur- oder Halteteile (1, 1', 5, 12, 14, 30, 40) aus unterschiedlichen Materialien bestehen und/oder wobei die miteinander zu verbindenden Strukturteile die tragende Struktur eine Lehnengestells (4) ausbilden.

17. Verfahren nach einem der vorherigen verfahrensbezogenen Ansprüchen, wobei ein jeweiliges Lehnengestell-Seitenteil (5) an mindestens einer der Verbindungsstellen mit einer oberen (30) oder einer unteren Quertraverse verbunden wird und/oder wobei ein jeweiliges Sitzgestell-Seitenteil (14) an mindestens einer der Verbindungsstellen mit einem Sitzgestell-Seitenwinkel (40) und/oder der Sitzgestell-Seitenwinkel (40) an mindestens einer der Verbindungsstellen mit einer Oberschiene (17) einer Fahrzeugsitz-Längsverstellung verbunden wird bzw. werden.

18. Verfahren nach einem der vorherigen verfahrensbezogenen Ansprüchen,
wobei zur Herstellung der Verbindung mehrere Schweißwerkzeuge gleichzeitig eingesetzt werden.

## Claims

1. Vehicle seat, in particular for motor vehicles,
said vehicle seat having a plurality of structural parts or retaining parts (1, 1', 5, 12, 14, 30, 40) that are connected to one another or to a further part at at least one connecting site, wherein the connection at at least one of the connecting sites is produced by means of frictional welding, wherein the frictional welding does not include ultrasonic welding, wherein one of the structural parts or holding parts (1, 1', 5, 12, 14, 30, 40) is configured as a backrest frame side part (5), wherein the backrest frame side part (5) is connected at at least one of the connecting sites to a fitting (8) for coupling to a seat frame (6), wherein assembly aids (6A, 8A; 6B, 8B) are provided on the backrest frame side part (5) and the fitting (8), said assembly aids forming an assembly aid pair and engaging into one another in a positive-locking manner, and said assembly aids are configured in such a manner that the backrest frame side part (5) and the fitting (8) may be moved relative to one another over a predetermined distance so as to perform a frictional welding procedure and after concluding a movement phase of the frictional welding procedure, said movement phase being used to heat the sections that are to be connected to one another, said backrest frame side part and the fitting are located in a predetermined position relative to one another by means of the assembly aids engaging with one another.

2. Vehicle seat according to claim 1,
wherein the connection to at least one of the connecting sites is produced by means of relative movement of the structural parts or holding parts (1, 1', 5, 12, 14, 30, 40) that are to be connected to one another, wherein the relative movement is produced in particular by means of back and forth movement of the structural parts or holding parts (1, 1', 5, 12, 14, 30, 40) that are to be connected to one another, preferably within a plane, by means of rotating at least one of the structural parts or holding parts that are to be connected to one another or by means of a multi-orbital frictional welding procedure.

3. Vehicle seat according to any one of the preceding claims,
wherein the connection to at least one of the connecting sites is produced by means of a frictional welding procedure.

4. Vehicle seat according to any one of the preceding claims,
wherein the connection is provided so as to transmit torque between the structural parts or holding parts (1, 1', 5, 12, 14, 30, 40) that are to be connected, in particular close to the edge or near to the site of the highest torque.

5. Vehicle seat according to any one of the preceding claims,
wherein the structural parts or holding parts (1, 1', 5, 12, 14, 30, 40) that are to be connected to one another are configured from different materials.

6. Vehicle seat according to any one of the preceding claims,
wherein the structural parts (1, 1', 5, 12, 14, 30, 40) that are to be connected to one another form the supporting structure of a backrest frame (4).

7. Vehicle seat according to any one of the preceding claims,
wherein the backrest frame side part (5) is connected at at least one of the connecting sites to an upper (30) or a lower crosspiece and/or wherein the seat frame side part (14) is connected at at least one of the connecting sites to a seat frame side angle (40) and/or the seat frame side angle (40) is or are connected at at least one of the connecting sites to an upper rail (17) of a vehicle seat longitudinal adjustment and/or wherein said seat frame side part comprises as structural parts (1, 1', 5, 12, 14, 30, 40), which are to be connected to one another, a connecting rod (12') having lever elements (1) that are attached to the two sides of said connecting rod and are fastened via respective connections to the connecting rod (12').

8. Vehicle seat according to any one of the preceding claims,
wherein the connection is produced at at least one of the connecting sites having an outer cone (56) and an inner cone (57).

9. Method for producing a vehicle seat, in particular for motor vehicles, in particular a vehicle seat according to any one of claims 1 to 8, said method having the steps:
providing at least two structural parts or holding parts (1, 1', 5, 12, 14, 30, 40) for a vehicle seat;
connecting two structural parts or holding parts (1, 1', 5, 12, 14, 30, 40) respectively to one another or to a further part at at least one connecting site, wherein the connection is produced at at least one of the connecting sites by means of frictional welding , wherein the frictional welding does not include ultrasonic welding, wherein one of the structural parts or holding parts (1, 1', 5, 12, 14, 30, 40) is configured as a backrest side part (5), wherein the backrest side part (5) is connected at at least one of the connecting sites to a fitting (8) so as to couple to a seat frame (6), wherein assembly aids (6A, 8a; 6B, 8B) are provided on the backrest frame side part (5) and the fitting (8), said assembly aids forming an assembly aid pair and engaging into one another in a positive-locking manner, and said assembly aids are configured in such a manner that the backrest frame side part (5) and the fitting (8) are moved over a predetermined distance relative to one another so as to perform a frictional welding procedure and after concluding a movement phase of the frictional welding procedure, said movement phase being used to heat the sections that are to be connected to one another, said backrest frame side part (5) and the fitting (8) are located in a predetermined position relative to one another by means of the assembly aids engaging with one another.

10. Method according to claim 9,
wherein the connection is produced at at least one of the connecting sites by means of relative movement of the structural parts or holding parts (1, 1', 5, 12, 14, 30, 40) that are to be connected to one another, wherein the relative movement is produced in particular by means of back and forth movement of the structural parts or holding parts (1, 1', 5, 12, 14, 30, 40) that are to be connected to one another, preferably within a plane, by means of rotating at least one of the structural parts or holding parts (1, 1', 5, 12, 14, 30, 40) or by means of a multi-orbital frictional welding procedure.

11. Method according to any one of the preceding method-related claims,
wherein during a procedure of rotational frictional welding connections on opposite-lying ends of parts, preferably of pipes and rods, to a structural part (1) respectively, the part having the opposite-lying ends is rotated.

12. Method according to any one of the preceding method-related claims,
wherein a lever element (1) is attached to a connecting rod (12') on both sides respectively via respective connections (51), wherein the two connections (51) that are provided on the two sides of the connecting rod (12') are produced simultaneously.

13. Method according to any one of the preceding method-related claims,
wherein the connection at at least one of the connecting sites is produced by means of a rotary friction welding procedure (52, 53).

14. Method according to claim 13,
wherein during the rotary friction welding procedure (52, 53) a welding tool, in particular a mandrel-shaped pin, is used, said mandrel-shaped pin being arranged between the structural parts or holding parts (1, 1', 5, 12, 14, 30, 40) so as to produce the connection at the connecting site and said mandrel-shaped pin performs a relative movement in relation to the structural parts or holding parts (1, 1', 5, 12, 14, 30, 40), in particular a rotating relative movement.

15. Method according to any one of the preceding method-related claims, wherein a connection is produced close to the edge or near the site of the highest torque so as to transmit torque.

16. Method according to any one of the preceding method-related claims,
wherein the structural parts or holding parts (1, 1', 5, 12, 14, 30, 40) that are to be connected to one another are configured from different materials and/or wherein the structural parts that are to be connected to one another form the supporting structure of a backrest frame (4) .

17. Method according to any one of the preceding method-related claims,
wherein a respective backrest frame side part (5) is connected at at least one of the connecting sites to an upper (30) or a lower crosspiece and/or wherein a respective seat frame side part (14) is connected at at least one of the connecting sites to a seat frame side angle (40) and/or the seat frame side angle (40) is connected at at least one of the connecting sites to an upper rail (17) of a vehicle seat longitudinal adjustment.

18. Method according to any one of the preceding method-related claims, wherein multiple welding tools are used simultaneously to produce the connection.

## Revendications

1. Siège de véhicule, en particulier pour véhicules automobiles,
comportant une pluralité d'éléments de structure ou de retenue (1, 1', 5, 12, 14, 30, 40) qui sont assemblés entre eux ou à un autre élément à au moins un point d'assemblage, l'assemblage étant réalisé à au moins un des points d'assemblage par soudage par friction, le soudage par friction ne comprenant pas de soudage par ultrasons, l'un des éléments de structure ou de retenue (1, 1', 5, 12, 14, 30, 40) étant réalisé sous la forme d'un élément latéral d'armature de dossier (5), lequel élément latéral d'armature de dossier (5) est assemblé à au moins un des points d'assemblage à une ferrure (8) pour l'accouplement à une armature de siège (6), des aides au montage (6A, 8A ; 6B, 8B) étant prévues sur l'élément latéral d'armature de dossier (5) et la ferrure (8), lesquelles forment une paire d'aides au montage qui s'engrènent l'une dans l'autre par complémentarité de forme et sont conçues de telle sorte que l'élément latéral d'armature de dossier (5) et la ferrure (8) peuvent être déplacés l'un par rapport à l'autre sur une distance prédéterminée pour réaliser un processus de soudage par friction et, à l'issue d'une phase de déplacement du processus de soudage par friction servant à chauffer les parties à assembler entre elles, sont positionnés l'un par rapport à l'autre dans une position prédéterminée par mise en butée mutuelle des aides au montage.

2. Siège de véhicule selon la revendication 1,
dans lequel l'assemblage est réalisé à au moins un des points d'assemblage par déplacement relatif des éléments de structure ou de retenue (1, 1', 5, 12, 14, 30, 40) à assembler entre eux, le déplacement relatif étant réalisé en particulier par déplacement en va-et-vient des éléments de structure ou de retenue (1, 1', 5, 12, 14, 30, 40) à assembler entre eux, de préférence dans un plan, par rotation d'au moins un des éléments de structure ou de retenue à assembler entre eux ou par soudage par friction multiorbital.

3. Siège de véhicule selon l'une des revendications précédentes,
dans lequel l'assemblage est réalisé à au moins un des points d'assemblage par soudage par friction-malaxage.

4. Siège de véhicule selon l'une des revendications précédentes,
dans lequel l'assemblage est prévu pour transmettre des couples entre les éléments de structure ou de retenue (1, 1', 5, 12, 14, 30, 40) à assembler, en particulier près du bord ou près du point de couple maximal.

5. Siège de véhicule selon l'une des revendications précédentes,
dans lequel les éléments de structure ou de retenue (1, 1', 5, 12, 14, 30, 40) assemblés entre eux sont constitués de matériaux différents.

6. Siège de véhicule selon l'une des revendications précédentes,
dans lequel les éléments de structure (1, 1', 5, 12, 14, 30, 40) assemblés entre eux forment la structure portante d'une armature de dossier (4).

7. Siège de véhicule selon l'une des revendications précédentes,
dans lequel l'élément latéral d'armature de dossier (5) est assemblé à au moins un des points d'assemblage à une traverse supérieure (30) ou inférieure et/ou dans lequel l'élément latéral d'armature de siège (14) est assemblé à au moins un des points d'assemblage à une cornière latérale d'armature de siège (40) et/ou la cornière latérale d'armature de siège (40) est assemblée à au moins un des points d'assemblage à un rail supérieur (17) d'un réglage longitudinal de siège de véhicule et/ou dans lequel une barre de liaison (12'), sur laquelle sont montés des éléments formant levier (1) qui sont fixés à la barre de liaison (12') de chaque côté de celle-ci par des assemblages respectifs, est prévue en tant qu'éléments de structure (1, 1', 5, 12, 14, 30, 40) assemblés entre eux.

8. Siège de véhicule selon l'une des revendications précédentes,
dans lequel l'assemblage est réalisé à au moins un des points d'assemblage avec un cône extérieur (56) et un cône intérieur (57).

9. Procédé de fabrication d'un siège de véhicule, en particulier pour véhicules automobiles, en particulier d'un siège de véhicule selon l'une des revendications 1 à 8, comprenant les étapes suivantes :
fourniture d'au moins deux éléments de structure ou de retenue (1, 1', 5, 12, 14, 30, 40) pour un siège de véhicule ;
assemblage de chaque fois deux éléments de structure ou de retenue (1, 1', 5, 12, 14, 30, 40) entre eux ou à un autre élément à au moins un point d'assemblage, l'assemblage étant réalisé à au moins un des points d'assemblage par soudage par friction, le soudage par friction ne comprenant pas de soudage par ultrasons, l'un des éléments de structure ou de retenue (1, 1', 5, 12, 14, 30, 40) étant réalisée sous la forme d'un élément latéral d'armature de dossier (5), lequel élément latéral d'armature de dossier (5) est assemblé à au moins un des points d'assemblage à une ferrure (8) pour l'accouplement à une armature de siège (6), des aides au montage (6A, 8A ; 6B, 8B) étant prévues sur l'élément latéral d'armature de dossier (5) et la ferrure (8), lesquelles forment une paire d'aides au montage qui s'engrènent l'une dans l'autre par complémentarité de forme et sont conçues de telle sorte que l'élément latéral d'armature de dossier (5) et la ferrure (8) peuvent être déplacés l'un par rapport à l'autre sur une distance prédéterminée pour réaliser un processus de soudage par friction et, à l'issue d'une phase de déplacement du processus de soudage par friction servant à chauffer les parties à assembler entre elles, sont positionnés l'un par rapport à l'autre dans une position prédéterminée par mise en butée mutuelle des aides au montage.

10. Procédé selon la revendication 9,
dans lequel l'assemblage est réalisé à au moins un des points d'assemblage par déplacement relatif des éléments de structure ou de retenue (1, 1', 5, 12, 14, 30, 40) à assembler entre eux, le déplacement relatif étant réalisé en particulier par déplacement en va-et-vient des éléments de structure ou de retenue (1, 1', 5, 12, 14, 30, 40) à assembler entre eux, de préférence dans un plan, par rotation d'au moins un des éléments de structure ou de retenue (1, 1', 5, 12, 14, 30, 40) à assembler entre eux ou par soudage par friction multiorbital.

11. Procédé selon l'une des revendications de procédé précédentes,
dans lequel, lors d'un soudage par friction en rotation d'assemblages à des extrémités opposées d'éléments, de préférence de tubes et de barres, à un élément de structure (1) respectif, l'élément présentant les extrémités opposées est tourné.

12. Procédé selon l'une des revendications de procédé précédentes,
dans lequel un élément formant levier (1) respectif est fixé de chaque côté à une barre de liaison (12') par des assemblages respectifs (51), les deux assemblages (51) prévus des deux côtés sur la barre de liaison (12') étant réalisés simultanément.

13. Procédé selon l'une des revendications de procédé précédentes,
dans lequel l'assemblage est réalisé à au moins un des points d'assemblage par un soudage par friction-malaxage (52, 53).

14. Procédé selon la revendication 13,
dans lequel on utilise pour le soudage par friction-malaxage (52, 53) un outil de soudage, en particulier une broche en forme d'épine, qui est disposé au point d'assemblage entre les éléments de structure ou de retenue (1, 1', 5, 12, 14, 34, 40) à assembler entre eux pour produire l'assemblage et effectue un mouvement relatif par rapport aux éléments de structure ou de retenue (1, 1', 5, 12, 14, 30, 40), en particulier un mouvement relatif rotatif.

15. Procédé selon l'une des revendications de procédé précédentes,
dans lequel un assemblage prévu pour transmettre des couples est réalisé près du bord ou près du point de couple maximal.

16. Procédé selon l'une des revendications de procédé précédentes,
dans lequel les éléments de structure ou de retenue (1, 1', 5, 12, 1.4, 30, 40) à assembler entre eux sont constitués de matériaux différents et/ou dans lequel les éléments de structure à assembler entre eux forment la structure portante d'une armature de dossier (4).

17. Procédé selon l'une des revendications de procédé précédentes,
dans lequel un élément latéral d'armature de dossier (5) respectif est assemblé à au moins un des points d'assemblage à une traverse supérieure (30) ou inférieure et/ou dans lequel un élément latéral d'armature de siège (14) respectif est assemblé à au moins un des points d'assemblage à une cornière latérale d'armature de siège (40) et/ou la cornière latérale d'armature de siège (40) est assemblée à au moins un des points d'assemblage à un rail supérieur (17) d'un réglage longitudinal de siège de véhicule.

18. Procédé selon l'une des revendications de procédé précédentes,
dans lequel plusieurs outils de soudage sont utilisés en même temps pour réaliser l'assemblage.
